# EUROPÄISCHE PATENTANMELDUNG

(11) **EP 1 095 730 A2**
(43) Veröffentlichungstag der Anmeldung: **02.05.2001**
(21) Anmeldenummer: 00121233.1
(22) Anmeldetag: 02.10.2000
(51) Int. Cl.: B23Q 1/01, B23Q 39/00, B23Q 39/04, B23Q 11/00

(54) **Vorrichtung zur Bearbeitung von Werkstücken sowie Verfahren zur Bearbeitung von Werkstücken unter Verwendung einer solchen Vorrichtung**

(30) Priorität: 09.10.1999 DE 19948822
(71) Anmelder: Gebr. Heller Maschinenfabrik GmbH, D-72622 Nürtingen (DE)
(72) Erfinder:
(74) Vertreter: Kohl, Karl-Heinz

(57) **Zusammenfassung**

Die Vorrichtung (1) hat eine horizontale Arbeitsspindel (8), die zum Werkzeugwechsel quer zu ihrer Achse verfahren wird. Bei der Bearbeitung der Werkstücke (9) wird die Arbeitsspindel (8) einer Biegebeanspruchung ausgesetzt, worunter die Bearbeitungsgenauigkeit leidet. Um eine hohe Bearbeitungsgenauigkeit zu erzielen, ist die Arbeitsspindel (8) hängend am Gestell (3) angeordnet. Dadurch entfällt die nachteilige Biegelinie der Arbeitsspindel (8). Die Werkstücke (9) können darum mit hoher Genauigkeit bearbeitet werden. Die Vorrichtung (2) wird vorteilhaft als Bearbeitungszentrum eingesetzt.

## Beschreibung

Die Erfindung betrifft eine Vorrichtung zur Bearbeitung von Werkstücken nach dem Oberbegriff des Anspruches 1 sowie ein Verfahren zur Bearbeitung von Werkstücken unter Verwendung einer solchen Vorrichtung nach dem Oberbegriff des Anspruches 47.

Es sind Bearbeitungszentren bekannt, bei denen die horizontale Arbeitsspindel das auf dem Werkstückträger befindliche Werkstück bearbeitet. Die Arbeitsspindel kann zum Werkzeugwechsel quer zu ihrer Achse verfahren werden. Aufgrund der horizontalen Lage wird die Arbeitsspindel bei der Bearbeitung der Werkstücke einer Biegebeanspruchung ausgesetzt, worunter die Bearbeitungsgenauigkeit leidet.

Der Erfindung liegt die Aufgabe zugrunde, die gattungsgemäße Vorrichtung und das gattungsgemäße Verfahren so auszubilden, daß die Werkstücke ohne konstruktiven Aufwand mit hoher Bearbeitungsgenauigkeit innerhalb kürzester Zeit bearbeitet werden können.

Diese Aufgabe wird bei der gattungsgemäßen Vorrichtung erfindungsgemäß mit den kennzeichnenden Merkmalen des Anspruches 1 und beim gattungsgemäßen Verfahren erfindungsgemäß mit den kennzeichnenden Merkmalen des Anspruches 47 gelöst.

Bei der erfindungsgemäßen Vorrichtung ist die Arbeitsspindel hängend am Gestell angeordnet. Dadurch entfällt die die Bearbeitungsgenauigkeit sehr nachteilig beeinflussende Wirkung der Biegelinie der Arbeitsspindel. Die Werkstücke können darum mit hoher Genauigkeit bearbeitet werden, ohne daß hierzu ein konstruktiver Aufwand notwendig ist.

Es ist vorteilhaft, wenn mindestens zwei Spindeln alternierend am Werkstück im Einsatz sind. Dann können größere Werkstücke auf einem Werkstückträger vorteilhaft bearbeitet werden. Die Werkzeugwechselzeit fällt dann in die Nebenzeit, während als Hauptzeitanteil lediglich die kurze Positionierzeit beim Verfahren des Werkstückes von der einen zur anderen Arbeitsspindel erscheint.

Vorteilhaft sind mindestens zwei Arbeitsspindeln gleichzeitig an mindestens zwei identischen Werkstücken im Einsatz. Dadurch ergibt sich ein minimaler baulicher Aufwand. Vorteilhaft ist eine solche Ausbildung bei kleineren Werkstücken, die in Mehrfachaufspannung auf einem Werkstückträger angeordnet sind.

Es ist aber auch möglich, daß mindestens zwei Arbeitsspindeln an zwei unterschiedlichen Werkstücken oder Werkstückpartien im Einsatz sind. Dann können an den Werkstücken ergänzende Bearbeitungen durch die beiden Arbeitsspindeln vorgenommen werden. Die erforderlichen Arbeitsoperationen können zeitlich gleichmäßig auf die Arbeitsspindel verteilt werden. Außerdem kann bei störungsbedingtem Ausfall der einen Arbeitsspindel die andere Arbeitsspindel die Produktion aufrechterhalten.

Bei einer vorteilhaften Ausbildung hat die Vorrichtung mindestens zwei Arbeitsspindeln, die jeweils in mindestens drei Raumachsen völlig unabhängig voneinander bewegbar sind. In diesem Falle ist ein Werkstückträger für eine alternierende Bearbeitung oder ein Werkstückträger mit Mehrfachaufspannung für eine simultane oder ergänzende Bearbeitung der Werkstücke vorgesehen.

Bei einer vorteilhaften Ausbildung hat die erfindungsgemäße Vorrichtung mindestens zwei Arbeitsspindeln, die in zwei Raumachsen völlig unabhängig voneinander bewegbar sind, und einen Werkstückträger, der in mindestens einer Raumachse beweglich ist. Mit einer solchen Ausbildung können die Werkstücke alternierend bearbeitet werden. Für die beiden Arbeitsspindeln sind vorteilhaft getrennte Werkzeugmagazine vorgesehen. Außerdem kann der Werkstückträger vorteilhaft um eine horizontale Drehachse für eine Trockenbearbeitung gedreht werden.

Bei einer weiteren vorteilhaften Ausbildung hat die erfindungsgemäße Vorrichtung mindestens zwei Arbeitsspindeln, die in zwei Raumachsen völlig unabhängig voneinander bewegbar sind, und mindestens zwei, jeweils unabhängige Werkstückträger. In diesem Fall sind sowohl simultane oder auch ergänzende Bearbeitung eines Werkstücktyps als auch völlig unabhängige Bearbeitung unterschiedlicher Werkstücke möglich.

Eine kostengünstige Ausbildung der erfindungsgemäßen Vorrichtung durch Zusammenfassen von zwei Werkzeug-Raumachsen und zwei Werkstück-Raumachsen ergibt sich, wenn mindestens zwei Spindeln, die in einer Raumachse unabhängig voneinander bewegbar sind, und zwei Werkstückträger vorgesehen sind, die in mindestens einer Raumachse gemeinsam bewegbar sind.

Um eine einfache und kostengünstige Anordnung für eine simultane Bearbeitung großer, identischer Werkstücke zu erhalten, hat die Vorrichtung erfindungsgemäß mindestens zwei Spindeln, die jeweils in einer Raumachse völlig unabhängig voneinander bewegbar sind, und mindestens zwei Werkstückträger, die jeweils in mindestens einer Raumachse bewegbar sind.

Um mehrere, auch unterschiedliche Werkstücke simultan bearbeiten zu können, ist es vorteilhaft, wenn die Vorrichtung mindestens zwei Spindeln, die jeweils in zwei Raumachsen völlig unabhängig voneinander bewegbar sind, und mindestens zwei Werkstückträger aufweist, die in mindestens einer Raumachse unabhängig voneinander bewegbar sind.

Die erfindungsgemäße Vorrichtung gemäß Anspruch 20hat ein Gestell, das mit einer Auskragung eines von einer Grundeinheit abstehenden Schenkels ausgebildet ist. Während C- oder L- oder Rahmengestelle im Werkzeugmaschinenbau sehr geläufig sind, überwindet das Gestell mit Auskragung uralte Vorurteile und schafft ideale Bedingungen für die Werkstückhandhabung und den Werkstücktransport.

Zweckmäßig ist das Gestell mit vier Führungsschienen für zwei Schlitteneinheiten und mit einem gemeinsamen Mittelsteg versehen, auf dem eine Führungsschiene der ersten Arbeitsspindel und eine Führungsschiene der zweiten Arbeitsspindel angeordnet sind. Diese Ausbildung schafft eine direkte Anbindung beider Spindelführungen auf kürzestem Abstand und damit minimalen Wärmedehnungen in Richtung des Spindelabstandes.

Vorteilhaft wird der auskragende Teil des Gestelles von Stützen getragen. Sie bewirken einen kurzen und biegefreien Kraftfluß von statischen und dynamischen Kräften in den Untergrund und behindern gleichzeitig die Funktionalität, insbesondere die Zugänglichkeit nach vorn, oben und der Seite nicht.

Die Vorrichtung gemäß Anspruch 22 hat ein als Monoblock ausgebildetes Gestell. Dadurch entfallen Fügeverbindungen zwischen den verschiedenen Baugruppenträgern, wie das Maschinenbett, die Ständer und das Joch. Dadurch werden sowohl die Kosten für die Fertigung der entsprechenden Schnittstellen eingespart als auch die Genauigkeitsverluste durch die unvermeidlichen Toleranzen der Fügepartner eliminiert, da alle Funktionsflächen in einer Aufspannung gefertigt werden. Außerdem ergibt sich ein reduzierter Montageaufwand, da viele Leitungen und Kanäle für Hydraulik, Pneumatik, Kühlschmierstoff und Elektrik nicht nachträglich installiert werden müssen, sondern bereits im Monoblock vorgesehen werden.

Die kompakte Ausführung des Monoblocks erlaubt eine Aufstellung der Maschine auf drei Abstütz- bzw. Befestigungspunkten, die statisch und dynamisch eindeutige Kraftflüsse sowie eine einfache, schnelle und reproduzierbare Aufstellung der Vorrichtung sowohl im Herstellerwerk als auch beim Kunden ermöglichen.

Vorteilhaft befinden sich die Werkzeugmagazine hinter den Spindeln; dadurch schränken die Werkzeuge im Magazin den verfügbaren Arbeitsraum der Werkzeuge nicht ein und behindern auch nicht den Arbeitsbereich der Ladeeinrichtung. Die Werkzeuge lassen sich den Werkzeugmagazinen im sogenannten Pick-up-System entnehmen, mit dem ein einfacher und störunanfälliger Werkzeugwechsel bei geringem Aufwand gewährleistet ist.

Wenn die Vorrichtung für mehrere Arbeitsspindeln ein gemeinsames Werkzeugmagazin aufweist, müssen Doppelwerkzeuge nur bei simultaner Bearbeitung identischer Werkstück bereitgehalten werden. Bei einer alternierenden oder ergänzenden Bearbeitung der Werkstücke ergibt sich ein minimaler Werkzeugaufwand.

Besonders vorteilhaft ist es, wenn jeder Arbeitsspindel ein eigenes Werkzeugmagazin zugeordnet ist. Dann müssen beide Arbeitsspindein beim Werkzeugwechsel im Falle extrem kurzer Werkzeugeinsatzzeiten nicht aufeinander warten, sondern können gleichzeitig auf ein neues Werkzeug zugreifen.

Um einen einfachen und störunanfälligen Werkzeugwechsel bei geringem Aufwand zu ermöglichen, erfolgt der Werkzeugwechsel nach dem Pick-up-System.

Es ist aber vorteilhaft auch möglich, für den Werkzeugwechsel einen Werkzeugwechsler vorzusehen, mit dem gegenüber dem Pick-up-System kürzere Span-zu-Span-Zeiten erreicht werden können.

Um das Auf- und Abspannen des Werkstückes während der Bearbeitungszeit eines anderen Werkstückes durchführen zu können, ist der Werkstückträger vorteilhaft als austauschbare Palette ausgebildet.

Um einen schnellen Austausch der Paletten zwischen dem Arbeitsraum und dem Rüstplatz bzw. dem Palettenbahnhof zu ermöglichen, ist die Vorrichtung vorteilhaft mit Palettenwechslern ausgestattet.

Eine vorteilhafte Ausbildung ergibt sich, wenn die zu bearbeitenden Werkstücke von Arbeitsspindel zu Arbeitsspindel weitergetaktet werden. Bei der seriellen Anordnung von Vorrichtungen erfolgt an jeder Arbeitsstation eine Bearbeitung, die die vorhergehende ergänzt. Bei dieser Transferbearbeitung sind einfache Schiebe- oder Lift-and-Carry-Transportsysteme vorteilhaft.

Es ist ferner zweckmäßig, die Werkstückträger von einer Ladestation aus über eine oder mehrere Bearbeitungsstationen zu einer Entladestation weiterzutakten. Diese Ausbildung empfiehlt sich bei Werk-Gründen der Positionierung oder Aufspannung nicht zum direkten Transfer eignen.

Vorteilhaft ist es, die Vorrichtung mit Ladeeinrichtungen für die Werkstücke zu versehen. Mit ihnen werden die Werkstücke aus bzw. in Werkstückspeicher und von Arbeitsstation zu Arbeitsstation transportiert. Dadurch ist auch ein zeitlich begrenzter bedienerloser Betrieb einer Fertigungszelle möglich.

Weiterhin können Ladeeinrichtungen dazu verwendet werden, das Werkstück am Eingang der Maschine auf einen sich außerhalb oder innerhalb der Maschine befindlichen Werkstückträger zu setzen und entsprechend am Ausgang der Maschine das Werkstück wieder vom Werkstückträger zu übernehmen.

Die erfindungsgemäße Vorrichtung gemäß Anspruch 25 zeichnet sich dadurch aus, daß zumindest zwei Raumachsen der Arbeitsspindel zwei unterschiedliche Antriebe zugeordnet sind. Dadurch kann je nach Bearbeitungsaufgabe der gewünschte Antrieb im Sinne der Optimierung des Gesamtsystems eingesetzt werden. Bei einem Werkstückspektrum mit sehr vielen Bearbeitungsoperationen mit sehr kurzen Werkzeugeingriffszeiten werden zum Beispiel im Interesse kurzer Nebenzeiten alle Vorschubachsen des Werkzeuges vorteilhaft mit hochdynamischen elektrischen Linearmotoren ausgerüstet.

Besonders vorteilhaft ist es, wenn der vertikal angeordnete Werkstückträger um eine horizontale Achse drehbar ist. Diese konstruktive Anordnung schafft kurze Kraftlinienverläufe im Gestell zwischen dem Werkstück und der Arbeitsspindel bzw. dem Spindelstock. Im Bereich unterhalb des Werkstückes können die Späne frei und vorzugsweise direkt in einen Späneförderer fallen. Damit kommen die die Prozeßwärme abführenden Späne nicht mit dem Gestell oder der Vorrichtung in Berührung und verursachen keinen Wärmeverzug und auch keine sonstigen Betriebsstörungen durch Spänestau.

Vorteilhaft ist die erfindungsgemäße Vorrichtung zur Trockenbearbeitung geeignet. Beim Trockenbearbeiten fehlt die die Spanabfuhr unterstützende oder leistende Strömung des Kühlschmierstoffes. Da der Werkstückträger vorteilhaft vertikal angeordnet und um eine horizontale Achse drehbar ist und die Arbeitsspindel hängend am Gestell gelagert ist, sind keine horizontalen oder nur leicht geneigten Flächen vorhanden, auf denen sich Spannester bilden könnten. Durch den ungehinderten freien Spänefall wird somit eine hohe Prozeßsicherheit erreicht.

Es ist zweckmäßig, für unterschiedliche Bearbeitungsaufgaben unterschiedliche Spindelstöcke vorzusehen. Dadurch ist eine einfache Anpassung an zum Beispiel allgemeine oder prozeßspezifische bzw. Grob- und Fein- bzw. Vor- und Fertig- bzw. Normal- und Hochgeschwindigkeits- bzw. Hochgenauigkeitsbearbeitung möglich.

Es ist vorteilhaft, wenn die Spindelstöcke in Richtung des Spindelabstandes thermosymmetrisch ausbildet sind. Der beim Betrieb unvermeidlich auftretende Wärmegang führt dann zu einer nur minimalen Spindelabstandsänderung und damit Positionsabweichung am Werkstück, insbesondere bei Umschlagbearbeitung und konzentrischen Bohrungen, die in mehreren Operationen bearbeitet werden.

Um einen Mindestabstand der Spindeln und damit eine minimale Verfahrzeit bei alternierende Arbeitsweise zu ermöglichen, ist die Vorrichtung vorteilhaft mit in Richtung des Spindelabstandes exzentrisch ausgebildeten Spindelköpfen versehen.

Mit der erfindungsgemäßen Vorrichtung und dem erfindungsgemäßen Verfahren können Werkstücke mit einer oder mehreren Arbeitsspindeln bearbeitet werden, deren Arbeitsweise je nach Werkstück, Bearbeitungsaufgabe am Werkstück und Produktionsstückzahl gewählt werden kann. Die Vorrichtung ermöglicht wahlweise einen seriellen, parallelen oder alternierenden Bearbeitungsmodus. Die vorteilhaft als Fertigungszelle bzw. Bearbeitungszentrum ausgebildete Vorrichtung erschließt aus diesem Grunde das Lösungsfeld aus Produktivität und Flexibilität der Fertigung in vorteilhafter Weise. Auf dem gemeinsamen Gestell sind die Werkzeug- und Werkstückträger angeordnet, die durch den Grad ihrer Kopplung auf unterschiedliche Bearbeitungsmodi zugeschnitten werden können.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in Vorderansicht eine erfindungsgemäße Vorrichtung,
- Fig. 2: die Vorrichtung gemäß Fig. 1 in Draufsicht,
- Fig. 3: in Vorderansicht eine zweite Ausführungsform einer erfindungsgemäßen Vorrichtung,
- Fig. 4: eine Seitenansicht der Vorrichtung gemäß Fig. 3,
- Fig. 5: eine Draufsicht auf die Vorrichtung gemäß Fig. 3,
- Fig. 6: in Vorderansicht eine dritte Ausführungsform einer erfindungsgemäßen Vorrichtung,
- Fig. 7: eine Draufsicht auf die Vorrichtung gemäß Fig. 6,
- Fig. 8: eine Ansicht längs der Linie VIII-VIII in Fig. 9,
- Fig. 9: eine Draufsicht auf die Vorrichtung gemäß Fig. 8,
- Fig. 10: eine Vorderansicht einer fünften Ausführungsform einer erfindungsgemäßen Vorrichtung,
- Fig. 11: eine Draufsicht auf die Vorrichtung gemäß Fig. 10,
- Fig. 12: eine Vorderansicht einer sechsten Ausführungsform einer erfindungsgemäßen Vorrichtung,
- Fig. 13: eine Seitenansicht der Vorrichtung gemäß Fig. 12,
- Fig. 14: eine Draufsicht auf die Vorrichtung gemäß Fig. 12,
- Fig. 15: eine Vorderansicht einer siebten Ausführungsform einer erfindungsgemäßen Vorrichtung,
- Fig. 16: eine Seitenansicht der Vorrichtung gemäß Fig. 15,
- Fig. 17: eine Draufsicht auf die Vorrichtung gemäß Fig. 15,
- Fig. 18: eine Vorderansicht einer achten Ausführungsform einer erfindungsgemäßen Vorrichtung,
- Fig. 19: eine Seitenansicht der Vorrichtung gemäß Fig. 18,
- Fig. 20: eine Draufsicht auf die Vorrichtung gemäß Fig. 18,
- Fig. 21: eine Vorderansicht einer neunten Ausführungsform einer erfindungsgemäßen Vorrichtung,
- Fig. 22: eine Seitenansicht der Vorrichtung gemäß Fig. 21,
- Fig. 23: eine Draufsicht auf die Vorrichtung gemäß Fig. 21,
- Fig. 24: eine Vorderansicht einer zehnten Ausführungsform einer erfindungsgemäßen Vorrichtung,
- Fig. 25: eine Draufsicht auf die Vorrichtung gemäß Fig. 24,
- Fig. 26: in Vorderansicht eine elfte Ausführungsform einer erfindungsgemäßen Vorrichtung,
- Fig. 27: eine Seitenansicht der Vorrichtung gemäß Fig. 26,
- Fig. 28: eine Draufsicht auf die Vorrichtung gemäß Fig. 26.

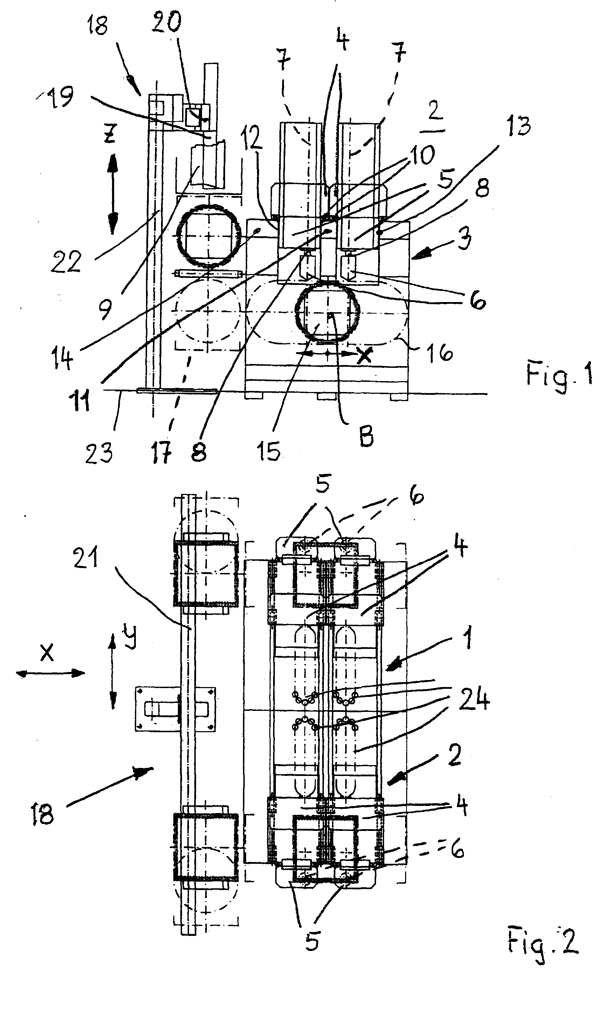

Die Vorrichtung gemäß den Fig. 1 und 2 weist zwei zweispindelige Bearbeitungszentren 1, 2 auf, die gleich ausgebildet und Rücken an Rücken angeordnet sind. Die beiden Bearbeitungszentren 1, 2 sind somit spiegelsymmetrisch zueinander angeordnet. Aus diesem Grunde wird im folgenden nur das in Vorderansicht vordere Bearbeitungszentrum 2 näher beschrieben. Es hat ein Maschinengestell 3, an dem zwei Schlitten 4 in Y-Richtung verfahrbar angeordnet sind. Die beiden Schlitten 4 tragen Spindelköpfe 5, die unabhängig voneinander bewegbar sind und jeweils ein Werkzeug 6 tragen. Die Schlitten 4 sind in Z-Richtung verfahrbar, so daß die Spindelachsen 7 senkrecht liegen. Die senkrechte Lage der Spindelachsen 7 und damit auch der Werkzeugachsen hat den Vorteil, daß die die Bearbeitungsgenauigkeit sehr nachteilig beeinflussende Wirkung der Biegelinie der Werkzeugträger, wie sie bei horizontaler Spindelanordnung auftritt, vermieden wird.

Wie insbesondere Fig. 1 zeigt, sind die beiden in den Spindelköpfen 5 vorgesehenen Spindeln 8 an den einander zugewandten Seiten der Spindelköpfe 5 angeordnet. Dadurch haben die Spindeln 8 und damit auch die Werkzeuge 6 nur minimalen Abstand voneinander. Aufgrund dieses minimalen Abstandes sind auch nur sehr geringe Verfahrzeiten für das zu bearbeitende Werkstück 9 bei alternierender Bearbeitungsweise notwendig. Bei dieser Arbeitsweise werden die Werkstücke 9 abwechselnd durch je eines der Werkzeuge 6 bearbeitet. So kann das auf dem Werkstückträger 15 festgespannte Werkstück 9 zunächst mit dem in Fig. 1 linken Werkzeug 6 bearbeitet werden. Während dessen kann der rechte Spindelkopf 5 in die Werkzeugwechselposition verfahren werden, um ein Werkzeug einzuwechseln, das für die nachfolgende Bearbeitung des Werkstückes 9 erforderlich ist. Ist die Bearbeitung des Werkstückes 9 durch das linke Werkzeug 6 beendet, wird der Werkstückträger 15 in X-Richtung unter das rechte Werkzeug 6 verfahren, das nunmehr die weitere Bearbeitung am Werkstück 9 vornimmt. Während dessen kann der linke Spindelkopf 5 in die Werkzeugwechselposition gefahren werden, um ein neues Werkzeug einzuwechseln. Die Verfahrwege für das Werkstück 9 sind sehr kurz, so daß in der Zeiteinheit die große Zahl von Werkstücken 9 in dieser alternierenden Weise bearbeitet werden kann.

Die Schlitten 4 werden auf dem Maschinengestell 3 längs Führungen 10 in Y-Richtung verfahren. Sie sind auf einem Mittelsteg 11 des Maschinengestelles 3 gelagert. Durch den Mittelsteg 11 werden zwei Ausnehmungen 12, 13 voneinander getrennt (Fig. 1), die an einem oberen, horizontalen Schenkel 14 des Maschinengestelles 3 vorgesehen sind, In die Ausnehmungen 12, 13 tauchen die vertikal verlaufenden Spindelköpfe 5 ein, wenn sie in Y-Richtung mittels der Schlitten 4 in die entsprechende Richtung verfahren werden. Wie Fig. 1 zeigt, ist der Abstand zwischen den Spindeln 8 und den auf dem Mittelsteg 11 befindlichen Führungen 10 nur sehr gering, so daß sich Wärmedehnungen im Betrieb allenfalls nur geringfügig auswirken.

Im Bereich unterhalb des Maschinengestellschenkels 14 befindet sich ein Werkstückträger 15, der in X-Richtung senkrecht zur Z- und zur Y-Richtung am Maschinengestell 3 verfahrbar ist. Auf dem Werkstückträger 15 werden die zu bearbeitenden Werkstücke 9 unmittelbar festgespannt. In Fig. 1 ist der Verfahrweg des Werkzeugträgers 5 am Maschinengestell 3 durch eine gestrichelte Linie 16 angegeben. Der Werkstückträger 15 kann durch eine zusätzliche Transportbewegung in X-Richtung in eine Zwischenposition 17 gefahren werden, in der sich der Werkstückträger 15 außerhalb des Arbeitsbereiches der Werkzeuge 6 befindet, In der Zwischenposition 17 wird der Werkstückträger 15 vom Palettenwechsler übernommen. Der Palettenwechsler schwenkt 180° um die horizontale Achse und befördert den Werkstückträger 15 in die Lade- bzw. Entladeposition, in deren Bereich sich die Ladeeinrichtung 18 befindet. Sie hat einen Greifer 19, mit dem die Werkstücke 9 gegriffen werden können. Der Greifer 19 ist an einem Schlitten 20 vorgesehen, der längs einer in Y-Richtung verlaufenden Führung 21 verfahrbar ist. Sie befindet sich im Bereich außerhalb der Maschinengestelle der beiden Bearbeitungszentren 1, 2 und liegt mit ihren Enden auf Stützen 22 auf, die auf dem Untergrund 23 stehen. Die Führung 21 ist so lang, daß die zu bearbeitenden Werkstücke 9 den Werkzeugen 6 an den voneinander abgewandten Außenseiten der Bearbeitungszentren 1, 2 zugeführt werden können. Beide Bearbeitungszentren 1, 2 sind mit jeweils einem Werkstückträger 15 versehen, auf dem die Werkstücke 9 unmittelbar festgespannt werden können.

Der Greifer 19 ist am Schlitten 20 auch in Z-Richtung verfahrbar, so daß er die Werkstücke 9 von dem jeweiligen in der Lade/Entladeposition befindlichen Werkstückträger 15 holen bzw. auf ihm ablegen kann.

Die Führung 21 kann sich auch bis zu einem (nicht dargestellten) Werkstückspeicher erstrecken. Aus ihm können die zu bearbeitenden Werkstücke 9 durch den Greifer 19 geholt und ihm nach der Bearbeitung wieder abgelegt werden.

Der Werkstückträger 15 ist um eine horizontal liegende Achse B schwenkbar (Fig. 1). Dies hat den Vorteil der nur sehr kurzen Kraftflußwege im Maschinengestell 3 bei der Bearbeitung.

Den Spindeln 8 der Bearbeitungszentren 1, 2 ist jeweils ein Werkzeugmagazin 24 zugeordnet, das in bekannter Weise ausgebildet und in einer Horizontalebene liegt. Jedes Werkzeugmagazin 24 ist endlos umlaufend ausgebildet und enthält die entsprechenden Werkzeuge. Zum Werkzeugwechsel wird die entsprechende Spindel 8 durch Verfahren in Y- und Z-Richtung zum zugehörigen Werkzeugmagazin 24 gefahren und dort das gerade benutzte Werkzeug 6 in einem leeren Speicherplatz abgelegt und durch Verfahren der Spindel 8 und/oder des Werkzeugmagazins 24 ein neues Werkzeug aufgenommen. Damit die Spindeln 8 zum Werkzeugmagazin 24 gelangen können, ist der horizontale Schenkel 14 des Maschinengestelles 3 mit den Ausnehmungen 12, 13 versehen, die sich so weit in Richtung auf das entsprechende Werkzeugmagazin 24 erstrecken, daß die entsprechende Spindel 8 in die entsprechende Wechselposition gefahren werden kann.

Da bei der Werkstückbearbeitung die Vorschub- bzw. Z-Achse die am meisten beanspruchte Achse ist, wird diese Z-Achse vorzugsweise mit einem hochdynamischen, elektrischen Linearmotor ausgerüstet. Die weniger beanspruchten Achsen X und Y werden mit herkömmlichen Kugelgewindetrieben ausgestattet. Die hochdynamischen elektrischen - oder auch hydraulischen - Linearmotoren führen zu sehr kurzen Nebenzeiten bei der Werkstückbearbeitung. Beispielsweise werden bei einem Werkstückspektrum mit sehr vielen Bohrvorgängen durch einen derartigen Antrieb der Z-Achse äußerst kurze Nebenzeiten erzielt.

Die Achsantriebe können selbstverständlich auch sämtlich mit elektrischen Linearmotoren ausgerüstet werden, da diese Antriebsart derzeit die kürzesten Positionierzeiten ermöglicht.

Die beiden Spindeln 8 jedes Bearbeitungszentrums 1, 2 sind alternierend am Werkstück 9 im Einsatz. Eine solche Ausbildung ist bei der Bearbeitung eines größeren Werkstückes 9 auf dem Werkstückträger 15 vorteilhaft. Die Werkzeugwechselzeit fällt in diesem Fall in die Nebenzeit; als Hauptzeitanteil erscheint lediglich die kurze Positionierzeit beim Verfahren des Werkstückes 9 mittels des Werkstückträgers 15 von der einen zur anderen Spindel 8. Bei beiden Bearbeitungszentren 1, 2 können gleichzeitig unterschiedliche Werkstücke 9 bearbeiten. Die Spindeln 8 jedes Bearbeitungszentrums 1, 2 sind in Y- und in Z-Richtung unabhängig voneinander bewegbar. Da zudem der Werkstückträger 15 in X-Richtung verfahrbar und um die parallel zur Y-Richtung liegende Achse B drehbar ist, können an jedem Bearbeitungszentrum 1, 2 die Werkstücke 9 alternierend bearbeitet werden. Mit den Werkzeugen 6 der Spindel 8 jedes Bearbeitungszentrums 1, 2 können am Werkstück 9 unterschiedliche Bearbeitungen vorgenommen werden, da die Spindeln 8 unabhängig voneinander in Y- und in Z-Richtung bewegt werden können.

Als Werkstückträger 15 können austauschbare Paletten eingesetzt werden. Mit ihnen ist es möglich, das Auf- und Abspannen des Werkstückes 9 während der Bearbeitungszeit eines anderen Werkstückes durchzuführen. Palettenwechsler ermöglichen einen schnellen Austausch der Paletten zwischen dem Arbeitsraum und dem Rüstplatz bzw. dem Palettenbahnhof. Vorteilhaft sind den beiden Bearbeitungszentren 1, 2 entsprechende Palettenwechsler zugeordnet.

Mit der Ladeeinrichtung 18 ist ein zeitlich begrenzter bedienerloser Betrieb der Bearbeitungszentren 1, 2 möglich. Mit der Ladeeinrichtung 18 können die Werkstücke 9 aus bzw. in die (nicht dargestellten) Werkstückspeicher und von Arbeitsstation zu Arbeitsstation transportiert werden.

Die Spindelstöcke 5 der Bearbeitungszentren 1, 2 können unterschiedlich gestaltet sein, so daß mit ihnen auch unterschiedliche Bearbeitungsaufgaben durchgeführt werden. So kann der eine Spindelstock 5 beispielsweise für eine Schruppbearbeitung und der andere Spindelstock 5 des Bearbeitungszentrums 1 bzw. 2 für eine Schlichtbearbeitung eingesetzt werden.

Da die Spindelköpfe 5 jedes Bearbeitungszentrums 1, 2 unabhängig voneinander bewegbar sind, kann das Werkstück 9 mit den entsprechenden Werkzeugen 6 alternierend bearbeitet werden.

Mit den zweispindeligen Bearbeitungszentren 1, 2 ist auch eine andere Arbeitsweise möglich, indem auf dem Werkstückträger 15 mehrere identische Werkstücke 9 festgespannt und diese durch die Werkzeuge 6 der beiden Spindeln 8 gleichzeitig bearbeitet werden.

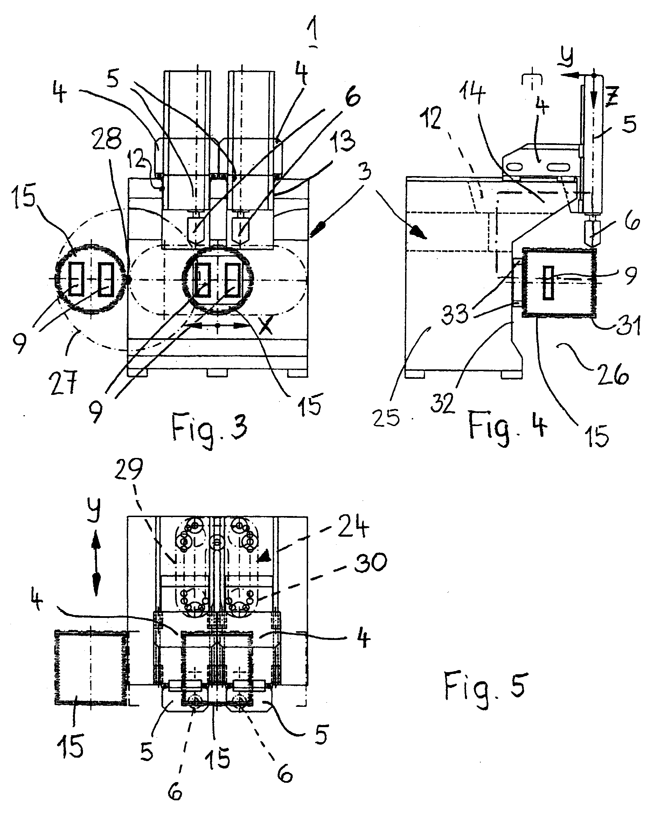

Die Fig. 3 bis 5 zeigen ein zweispindeliges Bearbeitungszentrum 1 mit dem Maschinengestell 3. Es ist entsprechend der vorigen Ausführungsform als Monoblock ausgebildet. Wie Fig. 4 zeigt, ist das Maschinengestell 3 mit einer Auskragung ausgebildet. Es hat die horizontalen Schenkel 14, die auf einer Grundeinheit 25 vorgesehen sind. Mit ihr steht das Maschinengestell 3 auf dem Untergrund auf. Bei den C- oder L-förmig ausgebildeten Maschinengestellen fallen bei der Bearbeitung der Werkstücke die Späne entweder auf Teile des Maschinengestelles selbst oder auf dort vorgesehene Vorrichtungsteile, wie zum Beispiel Werkstückspannvorrichtungen, Maschinentische oder Späneförderer. Da die Späne durch die Bearbeitung in der Regel sehr heiß sind, treten darum thermische Probleme am Maschinengestell auf, welche die Bearbeitungsgenauigkeit nachteilig beeinflussen. Aufgrund der auskragenden Ausbildung des Maschinengestelles 3 befindet sich im Arbeitsbereich unterhalb der Werkstücke 9 bzw. der Werkzeuge 6 kein Teil des Maschinengestelles 3 mehr, so daß auf überraschend einfache Weise die beschriebenen thermischen Probleme vermieden werden, ohne die Statik des Maschinengestelles 3 nachteilig zu beeinflussen. Aufgrund der auskragenden Ausbildung des Maschinengestelles 3 ergibt sich bei der Bearbeitung der Werkstücke 9 ein kurzer Kraftfluß, der in Fig. 4 durch eine strichpunktierte Linie angedeutet ist. Bei einer beispielsweise C-förmigen Ausbildung des Maschinengestelles ist dieser Kraftflußweg wesentlich größer, weil der Kraftfluß dann auch durch den unteren Fuß des Maschinengestelles verläuft. Der Kraftflußweg ist darum bei den bekannten Maschinengestellen nahezu doppelt so groß wie beim mit Auskragung ausgebildeten Maschinengestell 3.

Da der horizontale Schenkel 14 über die Vorderseite der Grundeinheit 25 vorsteht, wird im Bereich unterhalb des vorstehenden Schenkels 14 ein Freiraum 26 gebildet, in dem beispielsweise Transporteinrichtungen für die Werkstücke 9 vorgesehen sein können.

Der Werkstückträger 15 ist im Unterschied zur vorigen Ausführungsform für eine Doppelaufspannung vorgesehen, so daß auf ihm zwei Werkstücke 9 aufgespannt werden können.

Das Bearbeitungszentrum 1 hat einen Palettenwechsler 27, der um eine in Y-Richtung liegende Achse 28 drehbar ist. Sie ist vorteilhaft an einer Seite des Maschinengestelles 3 vorgesehen.

Wie sich aus Fig. 3 ergibt, können in einer Rüstposition auf dem als Palette ausgebildeten Werkstückträger 15 mehrere Werkstücke 9 aufgespannt werden. In der Rüstposition befindet sich der Werkstückträger 15 im Bereich neben der einen Seitenwand des Maschinengestelles 3, so daß die Werkstücke 9 einfach auf den Werkstückträger 15 aufgespannt werden können. Während dieser Rüstoperation werden auf dem Bearbeitungszentrum 1 zwei Werkstücke 9 durch die Werkzeuge 6 bearbeitet.

In der Rüstposition werden die durch die Werkzeuge 6 bearbeiteten Werkstücke 9 auch entladen. Sobald die Werkstücke 9 von den Werkzeugen 6 bearbeitet worden sind, wird der Werkstückträger 15 in X-Richtung zum Palettenwechsler 27 zurückgefahren und in bekannter Weise übernommen. Anschließend wird der Palettenwechsler 27 um die horizontale Achse 28 gedreht, wodurch der in der Rüstposition befindliche Werkstückträger 15 mit den aufgespannten Werkstücken 9 in das Bearbeitungszentrum 1 gebracht und gleichzeitig der Werkstückträger 15 mit den bearbeiteten Werkstücken 9 in die Rüstposition geschwenkt wird. Der Werkstückträger 15 mit den unbearbeiteten Werkstücken 9 wird in bekannter Weise vom Palettenwechsler 17 entkoppelt, so daß der Werkstückträger 15 auf dem Bearbeitungszentrum 1 in X-Richtung im Bereich unterhalb der Werkzeuge 6 verfahren werden kann. Die auf dem nunmehr in der Rüstposition befindlichen Werkstückträger 15 angeordneten, bearbeiteten Werkstücke 9 werden entladen und durch neue, noch zu bearbeitende Werkstücke ersetzt.

Im Unterschied zur vorigen Ausführungsform ist den beiden Spindelköpfen 5 ein gemeinsames Werkzeugmagazin 24 zugeordnet, das auf dem Maschinengestell 3 vorgesehen ist. Es ist in einer Horizontalebene hufeisenförmig angeordnet und endlos ausgebildet. Wie Fig. 5 zeigt, hat das Werkzeugmagazin 24 den beiden Spindelköpfen 5 zugeordnete Übergabepositionen 29, 30.

Die beiden Werkstücke 9 auf dem Werkstückträger 15 werden durch die beiden Werkzeuge 6 gleichzeitig bearbeitet. Die beiden Werkstücke 9 auf dem Werkstückträger 15 und die beiden Werkzeuge 6 sind jeweils gleich ausgebildet, so daß die gleichen Werkstücke 9 gleichzeitig auf die gleiche Weise bearbeitet werden.

Im übrigen ist das Bearbeitungszentrum 1 gleich ausgebildet wie bei der vorigen Ausführungsform. Die beiden Spindelköpfe 5 können mit den beiden Schlitten 4 auf dem horizontalen Schenkel 14 des Maschinengestelles 3 in Y-Richtung verfahren werden. Außerdem können die Spindelköpfe 5 relativ zu den Schlitten 4 in Z-Richtung verstellt werden. Die Verstellung in X-Richtung führen die Werkstücke 9 aus, indem der Werkstückträger 15 in der entsprechenden Richtung auf dem Bearbeitungszentrum 1 verfahren wird. Der Schenkel 14 des Maschinengestelles 3 weist die in Y-Richtung sich erstreckenden Ausnehmungen 12 und 13 auf, so daß die Spindelstöcke 5 mit den Werkzeugen 6 bis an das Werkzeugmagazin 24 gefahren werden können, das sich hinter den Spindelköpfen 5 befindet.

In Fig. 4 ist mit einer strichpunktierten Linie 31 die Werkstückstörkontur angegeben. Die Grundeinheit 25 des Maschinengestelles 3 weist an ihrer Stirnseite 32 in X-Richtung sich erstreckende Führungen 33 für den Werkstückträger 15 auf. Die Werkstücke 9 liegen während der Bearbeitung im Bereich unterhalb des über die Grundeinheit 25 vorstehenden Schenkels 14 des Maschinengestelles 3 (Fig. 4).

Wenn die Werkzeuge 6 gleich ausgebildet sind und gleiche Bearbeitungen an den beiden Werkstücken 9 vornehmen, sind im Werkzeugmagazin 24 die entsprechenden Werkzeuge doppelt vorhanden.

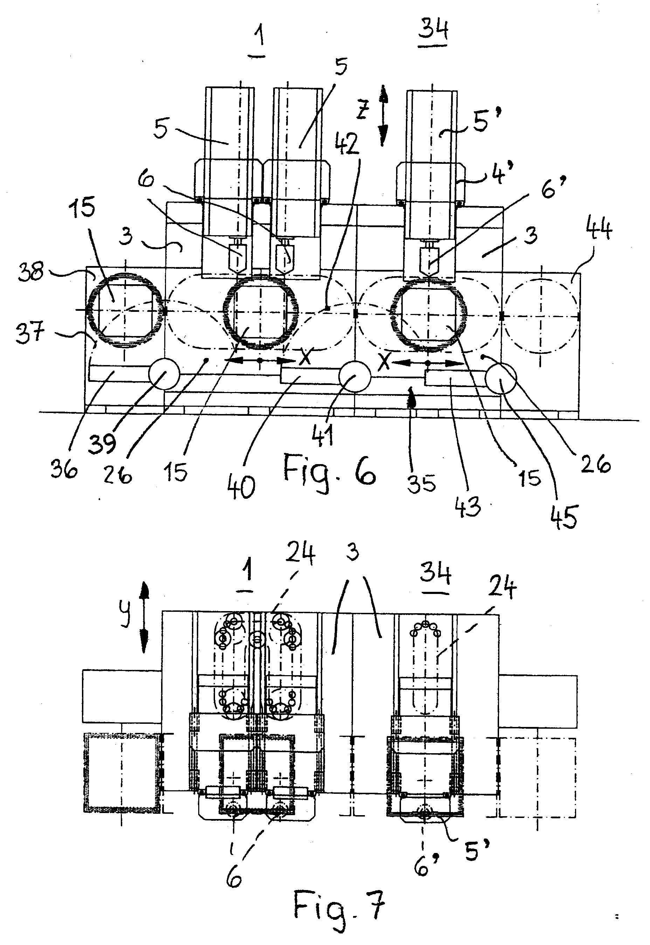

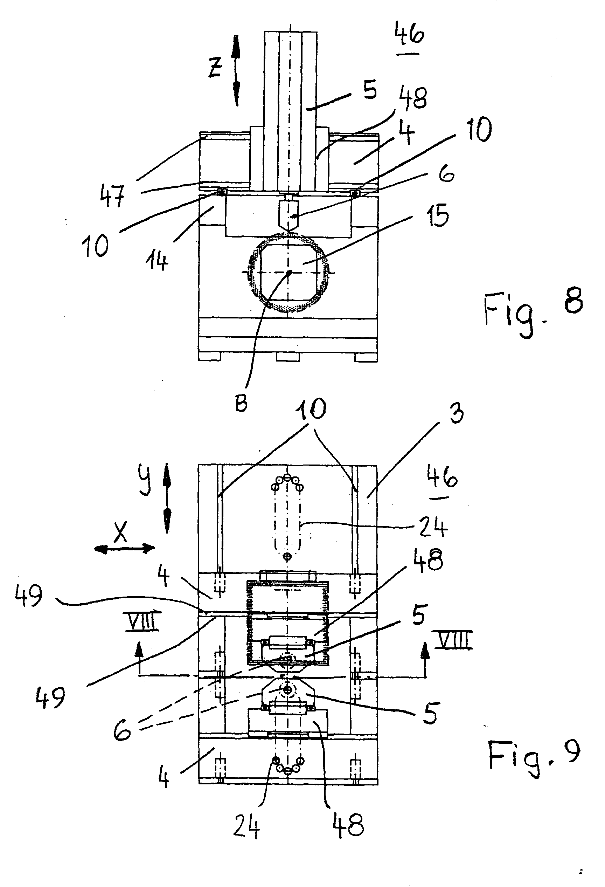

Beim Ausführungsbeispiel nach den Fig. 6 und 7 stehen ein zweispindeliges und ein einspindeliges Bearbeitungszentrum 1, 34 nebeneinander. Vorteilhaft liegen die Maschinengestelle 3 der beiden Bearbeitungszentren 1, 34 mit ihren Seitenwänden unmittelbar aneinander. Das zweispindelige Bearbeitungszentrum 1 ist entsprechend dem Ausführungsbeispiel nach den Fig. 3 bis 5 ausgebildet.

Das einspindelige Bearbeitungszentrum 34 hat den einzigen Spindelkopf 5', der mit dem Schlitten 4' auf dem Maschinengestell 3 in Y-Richtung verfahren werden kann. Außerdem kann der Spindelkopf 5' gegenüber dem Schlitten 4' in Z-Richtung verfahren werden. Die beiden Maschinengestelle 3 sind mit einer Auskragung ausgebildet, so daß im Bereich unterhalb der zu bearbeitenden Werkstücke, die auf dem Werkstückträger 15 in der beschriebenen Weise aufgespannt sind, der Freiraum 26 gebildet wird, in dem eine Transporteinrichtung 35 für die Werkstücke untergebracht ist. Mit der Transporteinrichtung 35 werden die zu bearbeitenden Werkstücke direkt nacheinander dem in einer Reihe in X-Richtung hintereinander liegenden Werkzeugen 6, 6' der beiden Bearbeitungszentren 1, 34 zugeführt. Die Werkstückträger 15 werden entsprechend den vorhergehenden Ausführungsformen in X-Richtung längs der Maschinengestelle 3 verschoben, um die Werkstücke zu den entsprechenden Werkzeugen 6, 6' zu transportieren. Die Werkstückträger 15 können Paletten sein, die nacheinander den beiden Bearbeitungszentren 1, 34 zugeführt werden. Diese Vorgehensweise hat den Vorteil, daß die Werkstücke auf den Paletten 15 aufgespannt bleiben, so daß keine Aufspannfehler auftreten. Es ist selbstverständlich auch möglich, die Werkstücke direkt nacheinander den Bearbeitungszentren 1, 34 zuzuführen und dort jeweils einzuspannen. Dadurch lassen sich Paletten und zugehörige Vorrichtungen in der Lade- und Entladestation einsparen.

Die Transporteinrichturig 35 arbeitet beispielhaft nach dem Lift-and-Carry-System. Sie hat einen ersten Transportarm 36, mit dem der Werkstückträger 15 längs der gestrichelten Bahn 37 von einem Beladebereich 38 aus bis unter die Werkzeuge 6 des Bearbeitungszentrums 1 transportiert wird. Der Beladebereich 38, in dem die Werkstücke auf dem Werkstückträger 15 aufgespannt werden, befindet sich auf der vom Bearbeitungszentrum 34 abgewandten Seite des Maschinengestelles 3 des Bearbeitungszentrums 1. Der Transportarm 36 wird um eine in Y-Richtung liegende Achse 39 geschwenkt, die vorteilhaft am Maschinengestell 3 vorgesehen ist.

Gleichzeitig mit dem Transportarm 36 wird ein zweiter Transportarm 40 der Transporteinrichtung 35 um eine ebenfalls in Y-Richtung liegende Achse 41 geschwenkt. Sie liegt auf gleicher Höhe wie die Schwenkachse 39 und ist vorteilhaft an einem der beiden Maschinengestelle 3 vorgesehen. Mit dem Transportarm 40 wird der im Bearbeitungszentrum 1 befindliche Werkstückträger 15 längs der Bahn 42 unter das Werkzeug 6' des einspindeligen Bearbeitungszentrums 34 transportiert. Synchron hierzu wird mit einem dritten Transportarm 43 der Transporteinrichtung 35 der im einspindeligen Bearbeitungszentrum 34 befindliche Werkstückträger 15 aus dem Bearbeitungszentrum 34 in eine Endladestation 44 transportiert. Der Transportarm 43 ist ebenfalls um eine in Y-Richtung liegende Achse 45 schwenkbar, die vorteilhaft auf gleicher Höhe wie die Schwenkachsen 39, 41 liegt und vorteilhaft am Maschinengestell 3 des einspindeligen Bearbeitungszentrums 34 vorgesehen ist. Die Transporteinrichtung 35 mit den verschiedenen Transportarmen 36, 40, 43 ist an sich bekannt, so daß sie nicht im einzelnen beschrieben wird. Die drei Transportarme 36, 40, 43 bewegen sich gleichzeitig, so daß die Werkstückträger 15 gleichzeitig transportiert werden. An jeder Arbeitsstation erfolgt vorteilhaft eine Werkstückbearbeitung, welche die vorhergehende ergänzt. Auf den jeweiligen Bearbeitungszentren 1, 34 sind die Werkstückträger 15 in der anhand der vorigen Ausführungsbeispiele beschriebenen Weise in X-Richtung verfahrbar.

Anstelle der beschriebenen, als Lift-and-Carry-System ausgebildeten Transporteinrichtung 35 kann auch ein einfaches Schiebetransportsystem eingesetzt werden. Mit ihm können die verschiedenen Werkstücke bzw. Werkstückträger 15 ebenfalls synchron den Bearbeitungszentren 1, 34 bzw. den Werkzeugen 6, 6' zugeführt werden.

Den beiden Spindelköpfen 5 des Bearbeitungszentrums 1 ist das gemeinsame Werkzeugmagazin 24 zugeordnet. Dem Spindelkopf 5' ist ein eigenes Werkzeugmagazin 24 zugeordnet, das ebenfalls im Arbeitsbereich hinter den Spindelköpfen am Maschinengestell 3 vorgesehen und gleich ausgebildet ist wie bei der Ausführungsform nach den Fig. 1 und 2.

Beim beschriebenen Ausführungsbeispiel sind die Bearbeitungszentren 1, 34 seriell angeordnet. An jeder Arbeitsstation erfolgt vorteilhaft eine Bearbeitung, die die vorhergehende ergänzt. Bei einer solchen Transferbearbeitung der Werkstücke können die beschriebenen, konstruktiv einfachen Lift-and-Carry-Systeme, Schiebe- oder Ketten- sowie sonstige Transportsysteme eingesetzt werden. Die Werkstücke werden von der Ladestation 38 über die Bearbeitungsstationen der Bearbeitungszentren 1, 34 zur Entladestation 44 weitergetaktet. Bei Werkstücken, die sich beispielsweise aufgrund ihrer Form und/oder Schwerpunktlage oder aus Gründen der Positionierung oder Aufspannung nicht zum direkten Transfer eignen, werden entsprechende Werkstückträger eingesetzt.

Der Freiraum 26 im Bereich unterhalb der Spindelköpfe 5, 5' hat, was auch für die vorigen Ausführungsbeispiele sowie für die noch im folgenden beschriebenen Ausführungsbeispiele gilt, einen wesentlichen Vorteil. Die zu bearbeitenden und bearbeiteten Werkstücke können durch fahrertose Wagen zu den entsprechenden Bearbeitungszentren gefahren bzw. von dort abgeholt werden. Diese fahrerlosen Wagen können aufgrund des Freiraumes 26 bequem an das Maschinengestell 3 angedockt werden.

Bei der Ausführungsform nach den Fig. 8 und 9 ist das Bearbeitungszentrum 46 zweispindelig ausgebildet. Im Gegensatz zu den vorigen Ausführungsbeispielen liegen die beiden Spindelköpfe 5 einander gegenüber. Beide Spindelköpfe 5 sind in den drei Achsen X, Y und Z unabhängig voneinander verfahrbar. Die Werkstücke sind auf dem Werkstückträger 15 aufgespannt, der wie bei den vorhergehenden Ausführungsbeispielen als Rundtisch ausgebildet ist. Für eine Vier-Seiten-Bearbeitung des Werkstückes kann der Werkstückträger 15 um die in Y-Richtung liegende horizontale Achse B jeweils um 90° gedreht werden.

Die Spindelköpfe 5 sind längs der Schlitten 4 in Z-Richtung verfahrbar. Die Schlitten 4 ihrerseits sind in Y-Richtung längs Führungen 10 verfahrbar, die auf dem Maschinengestell 3 vorgesehen sind. Wie sich aus Fig. 8 ergibt, sind die Schlitten 4 mit in X-Richtung sich erstreckenden Querführungen 47 versehen, mit denen sich die Spindelköpfe 5 in X-Richtung mittels Schlittenteilen 48 verfahren lassen.

Mit dem Werkzeug 6 des in Fig. 9 oberen Spindelkopfes 5 wird das Werkstück bearbeitet. Nach der Bearbeitung durch das Werkzeug 6 wird der Spindelkopf 5 in Y-Richtung längs der Führungen 10 zum Werkzeugmagazin 24 gefahren, das sich hinter dem Spindelkopf befindet und entsprechend der Ausführungsform nach den Fig. 1 und 2 ausgebildet ist. Im Werkzeugmagazin 24 wird das Werkzeug abgelegt und ein neues Werkzeug aufgenommen. Gleichzeitig wird der in Fig. 9 untere Spindelkopf 5 in Y-Richtung zum Werkstück gefahren, um dort mit seinem Werkzeug 6 die weitere Bearbeitung des Werkstückes vorzunehmen. Ist die Bearbeitung durch dieses Werkzeug 6 abgeschlossen, fährt der Spindelkopf 5 in Y-Richtung zu dem ihm zugeordneten Werkzeugmagazin 24 und wechselt dort im Pick-up-Verfahren das Werkzeug aus. Während dessen kann der andere Spindelkopf 5 mit seinem neuen Werkzeug 6 das Werkstück weiterbearbeiten. Auf diese Weise wird eine alternierende Bearbeitung am Werkstück vorgenommen, indem jeweils ein Werkzeug 6 das Werkstück bearbeitet, während am anderen Spindelkopf 5 ein neues Werkzeug eingewechselt wird.

Das Maschinengestell 3 besteht aus zwei Monoblockeinheiten mit Auskragungen, die so gegeneinander gestellt sind, daß die Stirnseiten 49 der horizontalen Schenkel 14 der Monoblockeinheiten aneinanderliegen oder einander zugewandt sind. Dadurch ist das aus den beiden Monoblockeinheiten mit Auskragungen gebildete Maschinengestell mit einem Tunnel versehen, der sich in X-Richtung durch das Bearbeitungszentrum 46 erstreckt. Die in Y-Richtung verlaufenden Führungen 10 sind nahe den beiden Seitenwänden des Maschinengestelles 3 vorgesehen. Bei den zweispindeligen Bearbeitungszentren 1 der vorigen Ausführungsform sind zusätzlich zwischen den Spindelköpfen 5 liegende Führungen 10 vorgesehen, um die beiden Schlitten 4 der zwei Spindelköpfe in Y-Richtung zu führen.

Da die beiden Spindelköpfe 5 in den drei Raumachsen X, Y, Z unabhängig bewegbar sind, können auf dem Werkstückträger 15 aufgespannte Werkstücke in der beschriebenen Weise alternierend bearbeitet werden. Der Werkstückträger 15 kann aber auch entsprechend der Ausführungsform nach den Fig. 3 bis 5 für eine Doppelaufspannung vorgesehen sein. In diesem Falle sind mehrere Werkstücke auf dem Werkstückträger 15 aufgespannt. Die Werkstücke können in diesem Falle gleichzeitig durch die beiden Werkzeuge 6 der Spindelköpfe 5 bearbeitet werden. Es ist aber auch möglich, mit den beiden Werkzeugen 6 in diesem Falle die Werkstücke ergänzend zu bearbeiten.

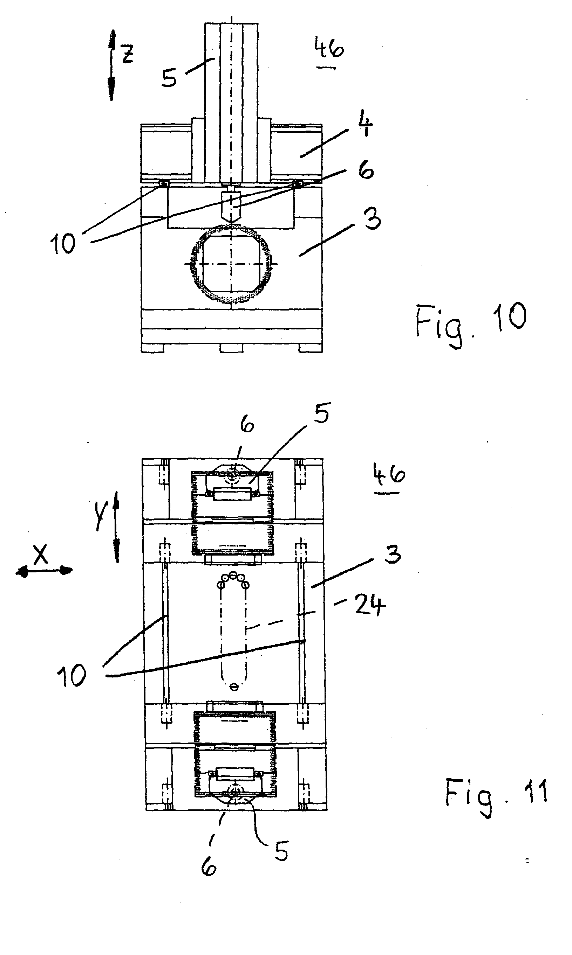

Auch die Ausführungsform gemäß den Fig. 10 und 11 ist als zweispindeliges Bearbeitungszentrum 46 ausgebildet, dessen Maschinengestell 3 aus zwei Monoblockeinheiten gebildet ist. Im Unterschied zur vorigen Ausführungsform sind die beiden Monoblock-Einheiten des Maschinengestelles 3 Rücken an Rücken angeordnet. Dadurch befinden sich die beiden Spindelköpfe 5 an den voneinander abgewandten Seiten der beiden Monoblockeinheiten. Den beiden Spindelköpfen 5 ist das gemeinsame Werkzeugmagazin 24 zugeordnet, das im Bereich zwischen den beiden Spindelköpfen 5 am Maschinengestell 3 vorgesehen ist. Das Werkzeugmagazin 24 ist gleich ausgebildet wie bei der Ausführungsform nach den Fig. 1 und 2. Die beiden Spindelköpfe 5 sind unabhängig voneinander in den drei rechtwinklig zueinander liegenden Achsen X, Y, Z verfahrbar. Um die jeweiligen Werkzeuge 6 ein- bzw. auszuwechseln, sind die Spindelköpfe 5 mittels der Schlitten 4 längs der Führungen 10 auf dem Maschinengestell 3 in Y-Richtung verfahrbar. Die Werkzeuge 6 der beiden Spindelköpfe 5 bearbeiten jeweils ein Werkstück. Diese Werkstücke können gleich, aber auch unterschiedlich ausgebildet sein. Die Werkstücke können durch die Werkzeuge 6 gleichartig oder unterschiedlich bearbeitet werden.

Die beiden Monoblock-Einheiten, die das Maschinengestell 3 bilden, sind wiederum mit Auskragungen ausgebildet. Im übrigen ist diese Ausführungsform gleich ausgebildet wie das Ausführungsbeispiel nach den Fig. 8 und 9.

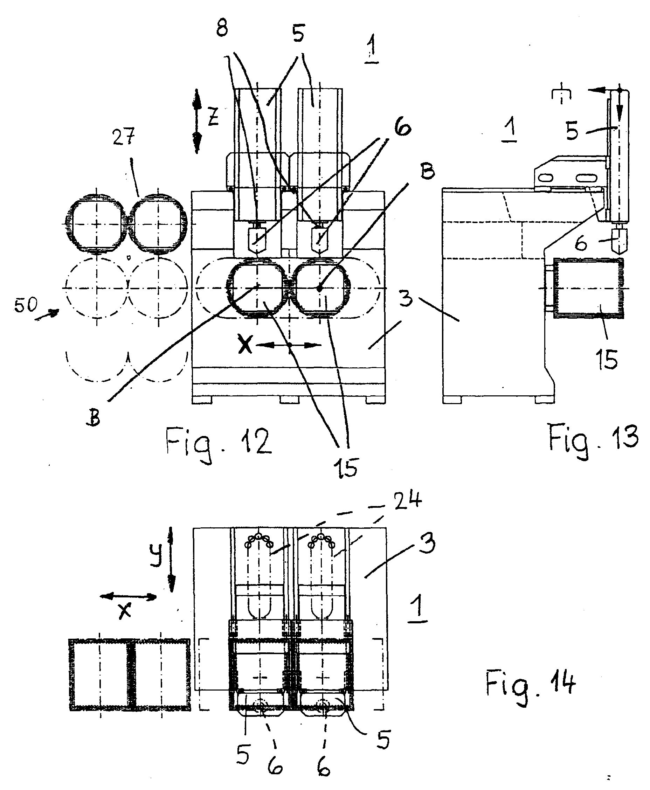

Bei der Ausführungsform nach den Fig. 12 bis 14 werden wie beim Ausführungsbeispiel nach den Fig. 10 und 11 zwei Werkstückträger 15 eingesetzt, die sich allerdings im Gegensatz zur vorigen Ausführungsform auf derselben Seite des Maschinengestelles 3 befinden. Es ist, wie Fig. 13 zeigt, wiederum mit Auskragung ausgebildet.

Die auf den Werkstückträgern 15 befindlichen Werkstücke werden durch die Werkzeuge 6 der beiden Spindelköpfe 5 gleichzeitig bearbeitet. Die Spindelköpfe 5 sind in Y- und in Z-Richtung unabhängig voneinander verfahrbar. In der X-Richtung werden die Werkstückträger 15 relativ zum entsprechenden Werkzeug 6 verfahren. Auf den Werkstückträgern 15 können gleiche, aber auch unterschiedliche Werkstücke aufgespannt sein. Dementsprechend können mit den Werkzeugen 6 an den beiden Werkstücken gleiche oder unterschiedliche Bearbeitungen vorgenommen werden. Die Werkstückträger 15 sind entsprechend dem vorherigen Ausführungsbeispiel ausgebildet und um die in Y-Richtung liegenden horizontalen Achsen B drehbar. Bei einer beispielsweise quaderförmigen Ausbildung ist das Werkstück so auf dem einen Werkstückträger 15 aufgespannt, daß mit dem einen Werkzeug 6 vier Seiten bearbeitet werden können. Auf dem anderen Werkstückträger 15 ist dieses Werkstück hingegen so aufgespannt, daß mit dem anderen Werkzeug 6 des Bearbeitungszentrums 1 die restlichen zwei Seiten des quaderförmigen Werkstückes bearbeitet werden können. Das Bearbeitungszentrum 1 ist somit so ausgebildet, daß die beiden Werkzeuge 6 an zwei unterschiedlichen Werkstücken oder Werkstückpartien im Einsatz sind. Dadurch können erforderliche ergänzende Arbeitsoperationen zeitlich gleichmäßig auf die Werkzeuge 6 verteilt werden. Bei einem eventuellen störungsbedingten Ausfall des einen Spindelkopfes 5 bzw. des einen Werkzeuges 6 kann der andere Spindelkopf 5 bzw. das andere Werkzeug 6 die Produktion aufrechterhalten.

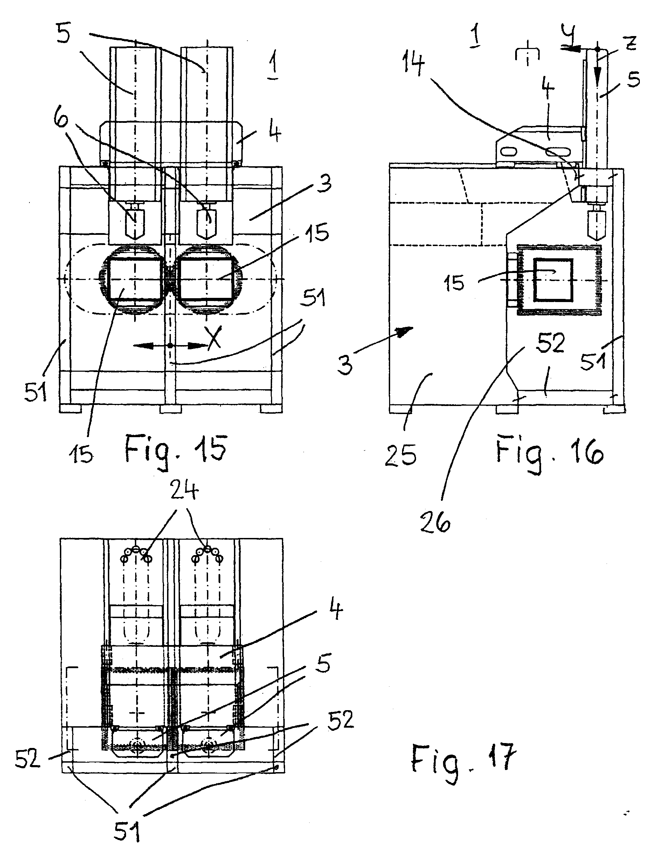

Wie sich aus Fig. 14 ergibt, ist jedem Spindelkopf 5 ein Werkzeugmagazin 24 zugeordnet, das entsprechend der Ausführungsform nach den Fig. 1 und 2 ausgebildet ist. Das entsprechende Werkzeug 6 kann dem Werkzeugmagazin 24 im Pick-up-Verfahren entnommen werden. Da den Spindelköpfen 5 jeweils ein Werkzeugmagazin 24 zugeordnet ist, müssen beide Spindelköpfe beim Werkzeugwechsel nicht aufeinander warten, sondern können gleichzeitig auf ein neues Werkzeug zugreifen.

Die beiden Werkstückträger 15 werden gleichzeitig in einer Be/Entladestation 50 eingespannt bzw. abgenommen. In ihr befindet sich der Palettenwechsler 27 mit vier Plätzen, von denen zwei mit Werkstückträgern und darauf befestigten Werkstückrohlingen bestückt sind. Die übrigen zwei Plätze stehen zur Aufnahme der in der Maschine befindlichen Werkstückträger mit den fertigbearbeiteten Werkstücken bereit. Der Werkstückwechsel läuft folgendermaßen ab:

Die im Arbeitsraum befindlichen Werkstückträger werden auf die freien Aufnahmeplätze des Rüstplatzes 50 transferiert und anschließend bearbeitet. Die Be- und Entladestation wird wieder angehoben, die fertigbearbeiteten Werkstücke werden entladen und durch Werkstückrohlinge ersetzt. Die Be- und Entladestation fährt nach unten und erwartet die Übergabe der im Arbeitsraum befindlichen Werkstücke auf ihre beiden oberen Plätze.

Die beiden Spindeln 8 der Spindelköpfe 5 liegen, bezogen auf die X-Richtung, in halber Breite der Spindelköpfe (Fig. 12). Dadurch sind die Spindeln 8 thermosymmetrisch in bezug auf den Abstand zwischen ihnen ausgebildet. Treten thermisch bedingte Verformungen auf, wirken sich diese aufgrund der symmetrischen Ausbildung nicht auf das Spindelabstandsmaß aus, so daß unabhängig von der Wärmebelastung der Spindelabstand stets gleich bleibt.

Die Fig. 15 bis 17 zeigen eine Ausführungsform, bei der der auskragende Schenkel 14 des Maschinengestells 3 durch vertikale Stützen 51 abgestützt ist. Sie sind am freien Ende des Schenkels 14 vorgesehen und stehen auf dem Untergrund auf. Am unteren Ende können die Stützen 51 durch in Y-Richtung liegende Streben 52 (Fig. 16) mit der Grundeinheit 25 des Maschinengestelles 3 verbunden sein. Die Stützen 51 bewirken einen kurzen und biegefreien Kraftfluß von statischen und dynamischen Kräften in den Untergrund, ohne daß sie gleichzeitig die Funktionalität, insbesondere die Zugänglichkeit des Freiraumes 26 von vorn, von oben und von den Seiten behindern.

Die beiden Spindelköpfe 5 des Bearbeitungszentrums 1 haben den gemeinsamen Schlitten 4, so daß die Spindelköpfe 5 in Y-Richtung miteinander gekoppelt sind. Dadurch können die Spindelköpfe und damit die Werkzeuge 6 nur gemeinsam in Y-Richtung verfahren werden. In Z-Richtung sind die beiden Spindelköpfe 5 unabhängig voneinander verstellbar am Schlitten 4 gelagert. Da die beiden Spindelköpfe 5 den gemeinsamen Schlitten 4 haben, wird ein Schlitten mit zugehörigem Antrieb und zugehöriger Meßeinrichtung eingespart. Den beiden Spindelköpfen 5 ist jeweils ein Werkzeugmagazin 24 zugeordnet, das entsprechend der Ausführungsform nach den Fig. 1 und 2 ausgebildet ist. Den Werkzeugmagazinen 24 können die Werkzeuge im Pick-up-Verfahren oder mittels Werkzeugwechsler entnommen werden.

Die zu bearbeitenden Werkstücke sind auf den Werkstückträgern 15 aufgespannt, die am Maschinenständer 3 in X-Richtung verfahrbar sind, Im übrigen ist dieses Ausführungsbeispiel gleich ausgebildet wie das Bearbeitungszentrum 1 gemäß den Fig. 12 bis 14.

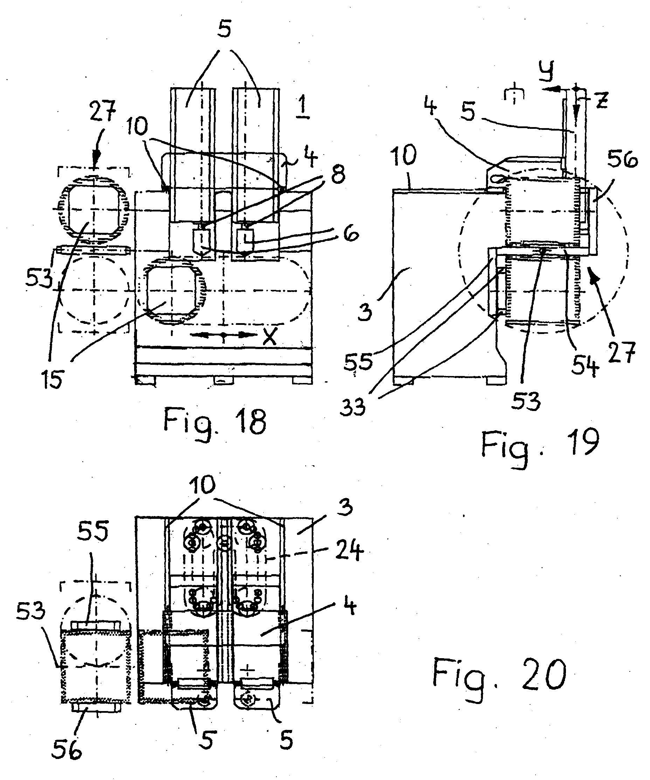

Die Fig. 18 bis 20 zeigen eine Ausführungsform, bei welcher der Palettenwechsler 27, der sich im Bereich neben dem Bearbeitungszentrum 1 befindet, um eine in X-Richtung liegende Achse 53 schwenkbar ist. Die beiden Spindelköpfe 5 des Bearbeitungszentrums 1 sind entsprechend dem vorigen Ausführungsbeispiel in der Y-Achse miteinander gekoppelt, d.h. sie haben den gemeinsamen Schlitten 4, der entsprechend der vorigen Ausführungsform auf dem Maschinenständer 3 längs der Führungen 10 in Y-Richtung verfahrbar ist. Im Unterschied zur vorigen Ausführungsform ist den beiden Spindelköpfen 5 das gemeinsame Werkzeugmagazin 24 zugeordnet, das entsprechend der Ausführungsform nach den Fig. 3 bis 5 ausgebildet und am Maschinengestell 3 vorgesehen ist.

Da der Palettenwechsler 27 um die Achse 53 schwenkbar ist, hat das Bearbeitungszentrum 1 in X-Richtung sehr kompakte Abmessungen. Die Schwenkachse 53 ist im Maschinengestell 3 gelagert. Der Palettenwechsler 27 hat, wie Fig. 19 zeigt, Z-Form, in Richtung der Schwenkachse 53 gesehen. Die Schwenkachse 53 ist in halber Breite eines Mittelsteges 54 des Palettenwechslers 27 vorgesehen. Der Mittelsteg 54 verbindet zwei senkrecht zu ihm liegende Aufspannteile 55, 56 für die Werkstückträger 15. Durch Schwenken des Palettenwechslers 27 um die Achse 53 wird der jeweilige Werkstückträger 15 vor die in X-Richtung verlaufende Führung 33 gebracht und mit dem aufgespannten Werkstück unter die Werkzeuge 6 transportiert. Während der Bearbeitung des Werkstückes kann auf dem im Palettenwechsler 27 befindlichen Werkstückträger 15 ein neues Werkstück aufgespannt werden.

Die Aufspannlage des Werkstückes kann bei dieser Ausführung nach Maßgabe der Beladeanforderung gewählt werden. Bei manueller Beladung kann die Aufspannfläche 55 bzw. 56 sowohl in horizontale als auch - bei Winkelaufspannung - in vertikale Lage gedreht werden. Bei der Beladung durch automatische Ladeeinrichtung wird das Werkstück zweckmäßigerweise zur Minimierung des erforderlichen Vertikalhubs der Ladeeinrichtung in die obere Stellung geschwenkt. Bei Roboterbeladung wird wegen der wünschenswerten Spänefreiheit der Werkstückauflageflächen die hängende Werkstücklage bevorzugt. Bei Beladung durch fahrerlose Wagen wird die untere Werkstücktage gewählt.

Die Spindeln 8 sind entsprechend der Ausführungsform nach den Fig. 6 und 7 exzentrisch in bezug auf die Spindelköpfe 5 angeordnet. Selbstverständlich ist es möglich, die Spindeln 8 auch in halber Breite der Spindelköpfe 5 entsprechend der Ausführungsform nach den Fig. 15 bis 17 anzuordnen.

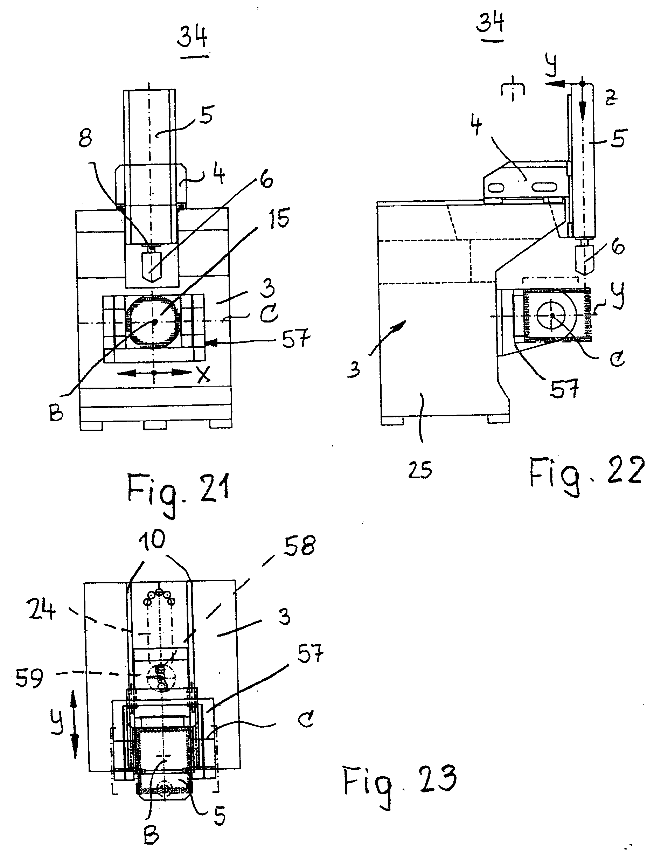

Das Bearbeitungszentrum 34 gemäß den Fig. 21 bis 23 ist einspindelig ausgebildet. Auf dem Maschinengestell 3 ist der Schlitten 4 in Y-Richtung längs der Führungen 10 verfahrbar. Der Spindelkopf 5 ist gegenüber dem Schlitten 4 in Z-Richtung verstellbar. An der Stirnseite der Grundeinheit 25 des Maschinengestelles 3 ist der Werkstückträger 15 in X-Richtung verfahrbar. Im Unterschied zu den vorigen Ausführungsbeispielen ist der Werkstückträger 15 in einer Wiege 57 aufgenommen, die C-förmigen Umriß hat (Fig. 23). Solche Wiegen sind bei Bearbeitungszentren bekannt und werden darum nicht im einzelnen erläutert. Die Wiege 57 ist um eine in X-Richtung liegende C-Achse schwenkbar. Der Werkstückträger 15, der von der Wiege 57 aufgenommen ist, ist um die senkrecht zur C-Achse liegende B-Achse schwenkbar, die sich in Y-Richtung erstreckt. Die Wiege 57 ist in X-Richtung verschiebbar, so daß das auf dem Werkstückträger 15 aufgespannte Werkstück durch das Werkzeug 6 in der gleichen Weise bearbeitet werden kann.

Mit diesem Bearbeitungszentrum 5 ist eine Fünfachsbearbeitung des Werkstückes möglich. Mit einer solchen Fünfachsbearbeitung ist insbesondere auch die Bearbeitung von schräg im Raum liegenden Bohrungen und Flächen möglich. Auch konvex oder konkav gekrümmte Flächen am Werkstück können auf diesem Bearbeitungszentrum 34 bearbeitet werden.

Zum Ein- und Auswechseln der Werkzeuge 6 ist am Maschinengestell 3 ein Werkzeugwechsler 58 (Fig. 23) vorgesehen, der um eine in Z-Richtung liegende Achse 59 schwenkbar ist. Der Werkzeugwechsler 58 ist im Bereich zwischen dem Werkzeugmagazin 24 und dem Spindelkopf 5 vorgesehen. Mit dem Werkzeugwechsler 58 können die Werkzeuge ein- und ausgewechselt werden. Dadurch ergeben sich sehr kurze Span-zu-Span-Zeiten. Die Ausbildung und Funktionsweise eines solchen Werkzeugwechslers ist bekannt und wird darum nicht näher beschrieben.

Die Spindel 8 ist, bezogen auf die X-Richtung, in halber Breite des Spindelkopfes 5 vorgesehen. Auch diese Ausführungsform kann mit einem der bereits beschriebenen Palettenwechsler ausgestattet werden. Selbstverständlich kann auch diese Ausführungsform mit Palettenwechsler ausgestattet werden.

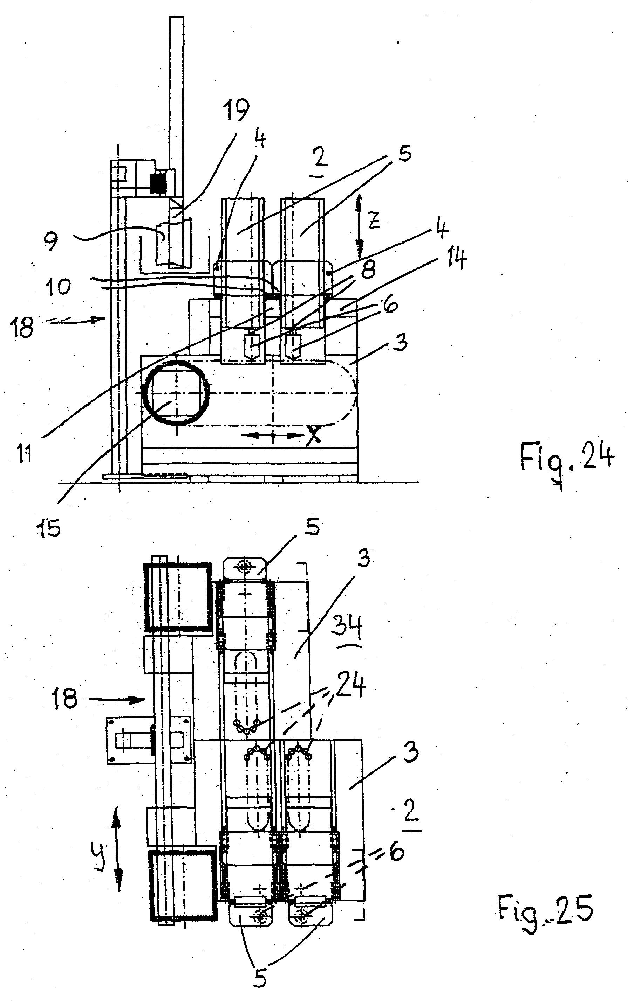

Die Fig. 24 und 25 schließlich zeigen eine Ausführungsform, die ähnlich ausgebildet ist wie das Ausführungsbeispiel nach den Fig. 1 und 2. Das zweispindelige Bearbeitungszentrum 2 ist gleich ausgebildet wie bei der Ausführungsform nach den Fig. 1 und 2. An die Rückseite dieses Bearbeitungszentrums 2 ist das einspindelige Bearbeitungszentrum 34 angeschlossen, das entsprechend der Ausführungsform nach den Fig. 6 und 7 ausgebildet ist. Die an der einen Längsseite der beiden Bearbeitungszentren 2, 34 befindliche Ladeeinrichtung 18 ist so angeordnet, daß mit ihrem Greifer 19 das Werkstück 9 sowohl den Spindelköpfen 5 des Bearbeitungszentrums 2 als auch dem Spindelkopf 5 des Bearbeitungszentrums 34 zugeführt werden kann. Die Ladeeinrichtung 18 ist im übrigen gleich ausgebildet wie beim Ausführungsbeispiel nach den Fig. 1 und 2.

Mit der Ausbildung gemäß den Fig. 24 und 25 ist es beispielsweise möglich, das Werkstück 9 zunächst auf dem einspindeligen Bearbeitungszentrum 34 zu bearbeiten, dann mit der Ladeeinrichtung 18 dem zweispindeligen Bearbeitungszentrum 2 zuzuführen und mit dessen Werkzeugen 6 entsprechende Bearbeitungen am Werkstück 9 vorzunehmen. Auch die umgekehrte Verfahrensweise ist möglich, also das Werkstück 9 zunächst auf dem zweispindeligen Bearbeitungszentrum 2 zu bearbeiten und anschließend zur weiteren Bearbeitung dem einspindeligen Bearbeitungszentrum 34 zuzuführen.

Den Spindelköpfen 5 der beiden Bearbeitungszentren 2, 34 ist jeweils ein eigenes Werkzeugmagazin 24 zugeordnet, das entsprechend dem Ausführungsbeispiel nach den Fig. 1 und 2 ausgebildet und auf dem Maschinengestell 3 angeordnet ist. Die beiden Spindelköpfe 5 des zweispindeligen Bearbeitungszentrums 2 sind unabhängig voneinander in Y- und in Z-Richtung verfahrbar. Der Werkstückträger 15 mit dem aufgespannten Werkstück 9 ist auf diese Weise in X-Richtung längs des Maschinengestelles 3 verfahrbar; und zwar so weit, daß er unmittelbar in den Bereich der Ladeeinrichtung gelangt, die ihrerseits einen erweiterten Hub aufweist, um das Werkstück direkt vom Werkstückträger 15 am einen Ende der X-Achse zu übernehmen. Auf diese Weise kann ein Palettenwechsler und eine Vorrichtung eingespart werden.

Die Spindeln 8 des Bearbeitungszentrums 2 sind in bezug auf die Spindelköpfe 5 wiederum exzentrisch so angeordnet, daß sie nur minimalen Abstand voneinander haben. Dadurch ergeben sich nur minimale Verfahrzeiten um das zu bearbeitende Werkstück 9 bei einer alternierenden Arbeitsweise, bei der die Werkzeuge 6 abwechselnd am Werkstück 9 arbeiten. Der Abstand zwischen den Spindeln 8 und den auf dem Winkelsteg 11 des Schenkels 14 des Maschinengestelles 3 befindlichen Führungen 10 ist aufgrund dieser Lage der Spindeln 8 nur sehr gering, so daß sich im Betrieb Wärmedehnungen allenfalls nur geringfügig auswirken.

Bei den Ausführungsbeispielen nach den Fig. 15 bis 17 und 18 bis 20 sind die beiden Spindelköpfe 5 durch den gemeinsamen Schlitten 4 in Y-Richtung miteinander gekoppelt, so daß die Spindelköpfe 5 in Y-Richtung nur gemeinsam verstellt werden können. In gleicher Weise ist es auch möglich, die Spindelköpfe 5 in Z-Richtung miteinander zu koppeln, so daß die Werkzeuge 6 auch in Vorschubrichtung Z nur gemeinsam verfahren werden können. Für eine solche Koppelung können die Schlitten 4 und die Spindelköpfe 5 mit entsprechenden Schnittstellen versehen werden. Es ist dadurch möglich, die Spindelköpfe 5 und die Schlitten 4 wahlweise miteinander zu koppeln, so daß die gemeinsame Verstellbarkeit in Y- und in Z-Richtung je nach Bearbeitungsaufgabe oder je nach Wunsch des Kunden vorgenommen werden kann. Bei den zweispindeligen Bearbeitungszentren 1, 2 können somit die Spindelköpfe in der beschriebenen Weise in Y- und in Z-Richtung unabhängig voneinander oder durch entsprechende Kopplung gemeinsam in Y- und/oder in Z-Richtung verfahren werden.

Eine solche Koppelung ist auch bei den Werkstückträgern 15 möglich, wenn sie paarweise dem Bearbeitungszentrum 1, 2 zugeführt werden. In diesem Fall können die Werkzeugträger 15 über entsprechende Schnittstellen in X-Richtung miteinander gekoppelt werden, so daß die Werkstückträger in dieser Richtung nur gemeinsam verstellt werden können.

Ebenso ist es möglich, auch die Schwenkbarkeit der Werkstückträger 15 um die B-Achse miteinander zu koppeln. In diesem Fall können die Werkstückträger 15 nur gemeinsam um ihre jeweilige B-Achse gedreht werden. Auch hier ist es möglich, diese Koppelung durch entsprechende Schnittstellen zu ermöglichen, so daß je nach Bearbeitungsaufgabe oder je nach Wunsch des Kunden die Drehkoppelung der Werkstückträger 15 auf dem Bearbeitungszentrum 1, 2 wahlweise vorgenommen oder aufgehoben werden kann.

Eine solche Koppelung ist auch für die C-Achse möglich (Fig. 21 bis 23). Anhand dieses Ausführungsbeispieles ist das Bearbeitungszentrum 34 beschrieben worden, das nur eine Wiege 57 aufweist. Eine solche Wiege 57 kann selbstverständlich auch bei den übrigen beschriebenen Ausführungsformen vorgesehen sein, so auch bei zweispindeligen Bearbeitungszentren. In diesem Falle ist es möglich, die Wiegen 57 unabhängig voneinander um die C-Achse zu drehen.

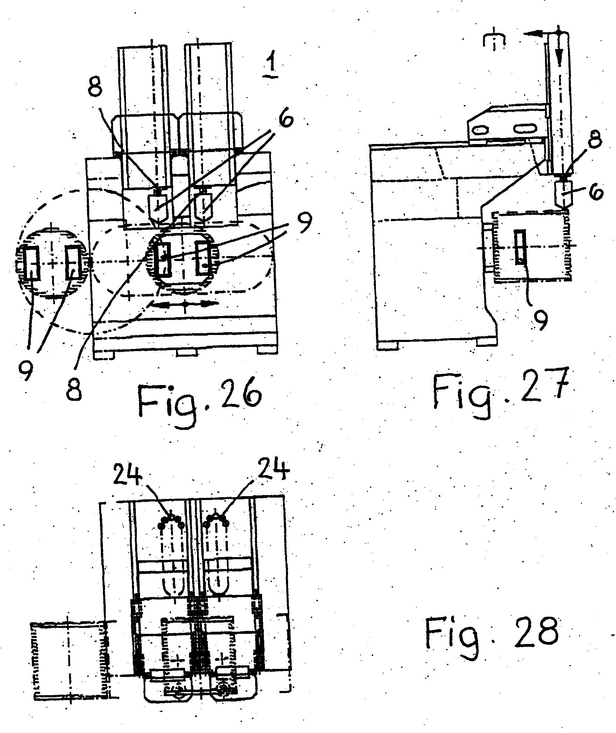

Es ist aber auch möglich, über entsprechende Schnittstellen die Drehung um die C-Achsen miteinander zu koppeln, so daß die Wiegen 57 nur gemeinsam um ihre jeweiligen C-Achsen gedreht werden können. Fig. 26 bis 28 zeigen ein dem in den Fig. 3 bis 5 dargestellten ähnliches Bearbeitungszentrum 1. Die Magazinierung der Werkzeuge 6 wurde für die simultane Bearbeitung mehrerer Werkstücke 9 durch zwei unabhängige, jeweils einer Spindel 8 zugeordnete Magazine 24 gelöst. Die simultane Bearbeitung ermöglicht, daß jede Arbeitsspindel 8 den identischen Arbeitsinhalt an dem ihr zugeordneten Werkstück ausführt.

Die beschriebenen Funktionsträger, wie Achsantriebe, Werkzeugträger, Werkstückträger oder Werkstücktransporteinrichtungen, können beliebig kombiniert werden. Sie eröffnen ein breites Lösungsfeld für je nach gewünschter Stückzahl, Teilefamilie oder Fertigungsflexibilität unterschiedliche Maschinenausführungen, aus deren Vielfalt einige, keineswegs erschöpfende konkrete Beispiele herausgegriffen worden sind.

## Patentansprüche

1. Vorrichtung zur Bearbeitung von Werkstücken, mit mindestens einem Gestell, an dem wenigstens ein Spindelkopf mit einer Arbeitsspindel in zumindest einer Richtung verstellbar gelagert ist, dadurch gekennzeichnet, daß die Arbeitsspindel (8) hängend am Gestell (3) angeordnet ist.

2. Vorrichtung nach Anspruch 1,
dadurch gekennzeichnet, daß die Arbeitsspindel (8) vertikal angeordnet ist.

3. Vorrichtung nach Anspruch 1 oder 2,
dadurch gekennzeichnet, daß die Vorrichtung (1, 2) zwei Arbeitsspindeln (8) aufweist, die jeweils hängend, vorzugsweise vertikal, angeordnet sind.

4. Vorrichtung nach einem der Ansprüche 1 bis 3,
dadurch gekennzeichnet, daß die Arbeitsspindel (8) in wenigstens zwei, vorzugsweise zueinander senkrechten Achsen (Y, Z) verstellbar ist.

5. Vorrichtung nach einem der Ansprüche 1 bis 4,
dadurch gekennzeichnet, daß die Arbeitsspindel (8) in einem Spindelstock (5, 5') vorgesehen ist, der mit einem Schlitten (4, 4') auf dem Gestell (3) verfahrbar gelagert ist.

6. Vorrichtung nach Anspruch 5,
dadurch gekennzeichnet, daß der Spindelstock (5, 5') in Vorschubrichtung (Z) gegenüber dem vorzugsweise senkrecht zur Vorschubrichtung (Z) auf dem Gestell (3) verfahrbaren Schlitten (4, 4') verstellbar ist.

7. Vorrichtung nach einem der Ansprüche 3 bis 6,
dadurch gekennzeichnet, daß die Arbeitsspindeln (8) jeweils unabhängig voneinander in wenigstens zwei vorzugsweise zueinander senkrechten Achsen (Y, Z) verstellbar sind.

8. Vorrichtung nach einem der Ansprüche 1 bis 7,
dadurch gekennzeichnet, daß am Gestell (3) mindestens ein Werkstückträger (15) in wenigstens einer vorteilhaft winklig, vorzugsweise rechtwinklig, zu den Raumachsen (Y, Z) der Arbeitsspindel (8) liegenden Raumachse (X) bewegbar ist.

9. Vorrichtung nach Anspruch 8,
dadurch gekennzeichnet, daß die Vorrichtung (1, 2) mindestens zwei Arbeitsspindeln (8), die jeweils in einer Raumachse unabhängig voneinander bewegbar sind, und einen Werkstückträger (15) aufweist, der in mindestens einer Raumachse bewegbar ist.

10. Vorrichtung nach Anspruch 8,
dadurch gekennzeichnet, daß die Vorrichtung (1, 2) mindestens zwei Arbeitspindeln (8), die in zwei Raumachsen (Y, Z) unabhängig voneinander bewegbar sind, und einen Werkstückträger (15) aufweist, der in mindestens einer Raumachse (X) bewegbar ist.

11. Vorrichtung nach Anspruch 8,
dadurch gekennzeichnet, daß die Vorrichtung (1, 2) mindestens zwei Arbeitsspindeln (8), die jeweils in einer Raumachse (Z) unabhängig voneinander bewegbar sind, und zwei Werkstückträger (15) aufweist, die in mindestens einer Raumachse (X) gemeinsam bewegbar sind.

12. Vorrichtung nach Anspruch 8,
dadurch gekennzeichnet, daß die Vorrichtung (1, 2) mindestens zwei Arbeitsspindeln (8), die jeweils in einer Raumachse (Z) unabhängig voneinander bewegbar sind, und mindestens zwei Werkstückträger (15) aufweist, die jeweils in mindestens einer Raumachse (X) bewegbar sind.

13. Vorrichtung nach Anspruch 8,
dadurch gekennzeichnet, daß die Vorrichtung (1, 2) mindestens zwei Arbeitsspindeln (8), die jeweils in zwei Raumachsen (Y, Z) unabhängig voneinander bewegbar sind, und mindestens zwei Werkstückträger (15) aufweist, die in mindestens einer Raumachse (X) unabhängig voneinander bewegbar sind.

14. Vorrichtung nach Anspruch 8,
dadurch gekennzeichnet, daß die Vorrichtung (1, 2) mindestens zwei Arbeitsspindeln (8), die jeweils in zwei Raumachsen (Y, Z) unabhängig voneinander bewegbar sind, und mindestens zwei Werkstückträger (15) aufweist, die in mindestens einer Raumachse (X) gemeinsam bewegbar sind.

15. Vorrichtung nach Anspruch 8,
dadurch gekennzeichnet daß die Vorrichtung (1, 2) eine oder mehrere Arbeitsspindeln (8) aufweist, die jeweils in drei Raumachsen (X, Y, Z) unabhängig voneinander bewegbar sind.

16. Vorrichtung nach einem der Ansprüche 1 bis 15,
dadurch gekennzeichnet, daß die Raumachsen (X, Y, Z) numerisch gesteuert sind.

17. Vorrichtung, insbesondere nach einem der Ansprüche 1 bis 16,
dadurch gekennzeichnet, daß das Werkstück (9) auf einem Werkstückträger (15) angeordnet ist, der um eine vorteilhaft horizontal angeordnete Drehachse (B), die vorzugsweise numerisch gesteuert ist, drehbar am Gestell (3) angeordnet ist.

18. Vorrichtung, insbesondere nach einem der Ansprüche 1 bis 17,
dadurch gekennzeichnet, daß das Werkstück (9) auf einem Werkstückträger (15) angeordnet ist, der um zwei zueinander senkrechte, vorzugsweise numerisch gesteuerte Rotationsachsen drehbar ist.

19. Vorrichtung nach einem der Ansprüche 8 bis 18,
dadurch gekennzeichnet, daß der Werkstückträger (15) als Palette ausgebildet ist.

20. Vorrichtung, insbesondere nach einem der Ansprüche 1 bis 19,
dadurch gekennzeichnet, daß das Gestell (3) mit einer Auskragung eines von einer Grundeinheit (25) abstehenden, vorzugsweise einstückig mit der Grundeinheit (25) ausgebildeten Schenkels (14) versehen ist, der vorteilhaft am oberen Ende der Grundeinheit (25) vorgesehen und auf dem Schenkel (14) der Schlitten (4, 4') verfahrbar gelagert ist.

21. Vorrichtung nach Anspruch 20,
dadurch gekennzeichnet, daß der auskragende Schenkel (14) von wenigstens einer vorteilhaft am unteren Ende durch eine Strebe (52) mit dem Gestell (3) verbundenen Stütze (51) abgestützt ist.

22. Vorrichtung, insbesondere nach einem der Ansprüche 1 bis 21,
dadurch gekennzeichnet, daß das Gestell (3) als Monoblock ausgebildet und vorteilhaft in drei Punkten nach unten abgestützt ist.

23. Vorrichtung, insbesondere nach einem der Ansprüche 1 bis 22,
dadurch gekennzeichnet, daß das Gestell (3) im Bereich unterhalb der Arbeitsspindel (8) einen Freiraum (26) ohne Störkonturen, wie z.B. Spänedurchbrüche, für Werkstücktransporteinrichtungen (35), Späneförderer und dergleichen aufweist.

24. Vorrichtung nach Anspruch 23,
dadurch gekennzeichnet, daß der vorteilhaft nach vorn und/oder nach einer oder beiden Seiten offene Freiraum (26) nach oben durch einen Gestellteil (14) begrenzt ist.

25. Vorrichtung, insbesondere nach einem der Ansprüche 1 bis 24,
dadurch gekennzeichnet, daß mehreren Raumachsen (X, Y, Z) mehrere unterschiedliche Antriebe zugeordnet sind.

26. Vorrichtung nach Anspruch 25,
dadurch gekennzeichnet, daß für die Vorschubachse (Z) der Arbeitsspindel (8), vorzugsweise für sämtliche Raumachsen (X, Y, Z), ein Linearmotor vorgesehen ist.

27. Vorrichtung nach Anspruch 25,
dadurch gekennzeichnet, daß sämtliche Linearachsen mit Kugelgewindetrieben ausgerüstet sind.

28. Vorrichtung nach einem der Ansprüche 3 bis 27,
dadurch gekennzeichnet, daß die beiden Arbeitsspindeln (8) gleich oder unterschiedlich ausgebildet sind.

29. Vorrichtung nach einem der Ansprüche 3 bis 27,
dadurch gekennzeichnet, daß eine der Arbeitsspindeln für allgemeine und die andere für prozeßspezifische Bearbeitung, z.B. Einlippenbohren, Feinbohren oder Mehrspindelbearbeitung, ausgelegt sind.

30. Vorrichtung nach einem der Ansprüche 3 bis 29,
dadurch gekennzeichnet, daß die Schlitten (4, 4') für die Arbeitsspindel (8) längs zweier Führungen (10) auf dem Gestell (3) verstellbar sind, die im Bereich zwischen den Arbeitsspindeln (8) jeweils einen Führungsteil aufweisen, die vorteilhaft auf einem vorzugsweise zwei Ausnehmungen (12, 13) für die Spindelköpfe (5, 5') voneinander trennenden Mittelsteg (11) des Gestelles (3) angeordnet sind.

31. Vorrichtung nach einem der Ansprüche 3 bis 30,
dadurch gekennzeichnet, daß die Arbeitsspindeln (8) in den einander zugewandten Hälften der nebeneinander angeordneten Spindelköpfe (5, 5') liegen.

32. Vorrichtung nach einem der Ansprüche 3 bis 31,
dadurch gekennzeichnet, daß die Arbeitsspindeln (8) in halber Breite der Spindelköpfe (5, 5') angeordnet sind.

33. Vorrichtung, insbesondere nach einem der Ansprüche 3 bis 32,
dadurch gekennzeichnet, daß die nebeneinander liegenden Spindelstöcke (5, 5') in Richtung wenigstens einer Raumachse (X, Y, Z) miteinander gekoppelt sind, und daß vorzugsweise zur Kopplung an den Schlitten (4, 4') und/oder an den Spindelstöcken (5, 5') vorteilhaft wahlweise koppel- und entkoppelbare Schnittstellen vorgesehen sind.

34. Vorrichtung, insbesondere nach einem der Ansprüche 9 bis 33,
dadurch gekennzeichnet, daß mehrere Werkstückträger (15) in Richtung ihrer Raumachse (X) miteinander gekoppelt sind.

35. Vorrichtung nach Anspruch 34,
dadurch gekennzeichnet, daß zur Kopplung an den Werkstückträgern (15) vorteilhaft wahlweise koppel- und entkoppelbare Schnittstellen vorgesehen sind.

36. Vorrichtung nach einem der Ansprüche 1 bis 35,
dadurch gekennzeichnet, daß bei Anordnung mehrerer Werkstückträger (15) diese hinsichtlich ihrer Bewegung um die Drehachse (B) untereinander beliebig entkoppelt und gekoppelt werden können.

37. Vorrichtung nach einem der Ansprüche 1 bis 36,
dadurch gekennzeichnet, daß auf der vom Arbeitsbereich der Arbeitsspindel (8) abgewandten Seite wenigstens ein Werkzeugmagazin (24) vorgesehen ist.

38. Vorrichtung nach Anspruch 37,
dadurch gekennzeichnet, daß jeder Arbeitsspindel (8) jeweils ein Werkzeugmagazin (24) zugeordnet ist.

39. Vorrichtung nach Anspruch 37,
dadurch gekennzeichnet, daß jeder Arbeitsspindel (8) mehrere Werkzeugmagazine (24) angeordnet sind.

40. Vorrichtung nach Anspruch 37,
dadurch gekennzeichnet, daß den Arbeitsspindeln (8) ein gemeinsames Werkzeugmagazin (24) zugeordnet ist.

41. Vorrichtung nach einem der Ansprüche 1 bis 40,
dadurch gekennzeichnet, daß ein Werkzeugwechsel im Pick-up-Verfahren erfolgt.

42. Vorrichtung nach einem der Ansprüche 1 bis 40,
dadurch gekennzeichnet, daß die Vorrichtung (1, 2, 34, 46) mit mindestens einem, vorteilhaft um eine parallel zur Vorschubachse (Z) der Arbeitsspindel (8) liegende Achse (59) schwenkbaren Werkzeugwechsler (58) versehen ist.

43. Vorrichtung nach einem der Ansprüche 1 bis 42,
dadurch gekennzeichnet, daß im Bereich neben der Vorrichtung (1, 2, 34, 46) mindestens eine, vorteilhaft die Werkstückträger in und/oder außerhalb der Maschine be- bzw. entladende Ladeeinrichtung (18) für die Werkstücke (9) vorgesehen ist.

44. Vorrichtung nach einem der Ansprüche 1 bis 43,
dadurch gekennzeichnet, daß die Vorrichtung (1, 2, 34, 46) mit mindestens einem Palettenwechsler (27) versehen ist.

45. Vorrichtung nach einem der Ansprüche 1 bis 44,
dadurch gekennzeichnet, daß die Achse eines Werkstück-Rüstplatzes und die Drehachse des Werkstückträgers achsparallel verlaufen.

46. Vorrichtung nach einem der Ansprüche 1 bis 45,
dadurch gekennzeichnet, daß der Werkstücktransport zwischen den Arbeitsspindeln (8) der einzelnen Vorrichtungen durch eine automatische Transporteinrichtung, z.B. eine Schubstange, eine Kette oder Lift-and-Carry, erfolgt.

47. Verfahren zur Bearbeitung von Werkstücken unter Verwendung einer Vorrichtung nach einem der Ansprüche 1 bis 46, bei dem mindestens ein Werkzeug wenigstens ein Werkstück bearbeitet, dadurch gekennzeichnet, daß das Werkzeug (6) das Werkstück (9) in hängender Lage bearbeitet.

48. Verfahren nach Anspruch 47,
dadurch gekennzeichnet, daß das Werkstück (9) abwechselnd durch je ein Werkzeug (6) von wenigstens zwei Arbeitsspindeln bearbeitet wird.

49. Verfahren nach Anspruch 47,
dadurch gekennzeichnet, daß zwei Werkzeuge (6) gleichzeitig zwei gleiche Werkstücke (9) bearbeiten.

50. Verfahren nach Anspruch 47,
dadurch gekennzeichnet, daß zwei Werkzeuge (6) gleichzeitig zwei unterschiedliche Werkstücke (9) bearbeiten.

51. Verfahren nach Anspruch 47,
dadurch gekennzeichnet, daß das Werkstück (9) von Arbeitsstation zu Arbeitsstation weitergetaktet wird, und daß vorteilhaft die Werkzeuge (6) einander ergänzende Bearbeitungen am Werkstück (9) vornehmen.

52. Verfahren nach einem der Ansprüche 47 bis 51,
dadurch gekennzeichnet, daß die Werkstücke (9) von einer Beladestation (38) über eine oder mehrere Bearbeitungsstationen zu einer Entladestation (44) gefördert werden.
